# FASCICULE DE BREVET EUROPEEN

(11) **EP 3 002 604 B1**
(45) Date de publication et mention de la délivrance du brevet: **29.03.2017**
(21) Numéro de dépôt: 15187307.2
(22) Date de dépôt: 29.09.2015
(51) Int. Cl.: G01S 7/03, G01S 13/88, H01Q 3/14, G01S 7/02

(54) **GIRAVION EQUIPE D'UN RADIOALTIMETRE MUNI D'ANTENNES PLANES ET D'UNE LENTILLE DE MODIFICATION DU CHAMP DE VISION DES ANTENNES**
DREHFLÜGELFLUGZEUG, DAS MIT EINEM FUNKHÖHENMESSER MIT FLACHANTENNEN UND EINER LINSE ZUR SICHTFELDÄNDERUNG DER ANTENNEN AUSGESTATTET IST
A ROTORCRAFT FITTED WITH A RADIOALTIMETER HAVING PLANE ANTENNAS AND A LENS FOR MODIFYING THE FIELD OF VIEW OF THE ANTENNAS

(30) Priorité: 03.10.2014 FR 1402246
(43) Date de publication de la demande: 06.04.2016
(73) Titulaire: Airbus Helicopters, 13725 Marignane Cedex (FR)
(72) Inventeur: JEHAMY, Eddy, 13220 Chateauneuf les Martigues (FR)
(74) Mandataire: Pouillot, Laurent Pierre Paul

(56) Documents cités:
- EP-A1- 1 933 163
- JP-A- H10 268 039
- US-A- 3 088 109
- US-A1- 2005 253 750
- NONNENMACHER D ET AL: "System architecture of HALAS-a helicopter slung load stabilisation and positioning sy", CEAS AERONAUTICAL JOURNAL, SPRINGER VIENNA, VIENNA, vol. 5, no. 2, 10 décembre 2013 (2013-12-10), pages 127-143, XP035317934, ISSN: 1869-5582, DOI: 10.1007/S13272-013-0095-7 [extrait le 2013-12-10]

## Description

La présente invention est du domaine des giravions et relève plus particulièrement des aménagements associés aux antennes des radioaltimètres équipant les giravions.

Les giravions sont classiquement équipés d'un radioaltimètre fournissant des données de hauteur-sol du giravion. Le radioaltimètre met en oeuvre un couple d'antennes, dont une antenne émettrice par impulsion ou en continu d'un signal radioélectrique et une antenne réceptrice captant ledit signal radioélectrique après réflexion sur le sol.

La hauteur-sol du giravion est déterminée par un calculateur du radioaltimètre en divisant, par la vitesse de propagation d'une onde électromagnétique dans l'air, le temps écoulé entre l'émission du signal radioélectrique par l'antenne émettrice et la réception de ce signal radioélectrique par l'antenne réceptrice.

Les antennes du radioaltimètre sont positionnées à bord du giravion de manière à éviter une réflexion du signal radioélectrique contre la structure de l'hélicoptère. C'est pourquoi les antennes sont classiquement implantées sous le giravion, l'emplacement des antennes sous le giravion étant bien évidemment considéré au regard de la station du giravion au sol. Par ailleurs, les antennes du radioaltimètre sont communément protégées de l'environnement extérieur au giravion, intempéries notamment, par un radôme typiquement agencé en coupole transparente aux ondes radioélectriques.

Cependant, les giravions sont occasionnellement exploités pour des missions de vol spécifiques relevant du transport d'une charge par élingage. Dans ce contexte, il se pose le problème d'une possible interférence entre la charge transportée par élingage et les signaux radioélectriques échangés entre les antennes du radioaltimètre.

En effet, la charge transportée par élingage est ballante sous le giravion, ce qui rend possible son intrusion dans le champ de vision du radioaltimètre défini par les antennes lors de la progression du giravion. Dans ce contexte, une telle intrusion induit un risque de réflexion des signaux radioélectriques échangés entre les antennes sur la charge et non sur le sol, et en conséquence rend douteuse la pertinence de la hauteur-sol fournie par le radioaltimètre.

Un tel risque d'intrusion de la charge dans le champ de vision des antennes est accru dans le cas où l'emplacement des antennes à bord du giravion est situé à faible distance du matériel d'élingage, tel que notamment pour un giravion de taille modérée.

Un tel risque d'intrusion de la charge dans le champ de vision des antennes est connu de longue date et une solution classiquement utilisée pour éviter tout risque d'interférence entre la charge transportée par élingage et les signaux radioélectriques échangés entre les antennes consiste à implanter à bord du giravion des antennes « cornet » identifiant un champ de vision du radioaltimètre réduit.

Cependant une telle solution n'est pas satisfaisante, car la capacité de mesure de la hauteur-sol du giravion est limitée lors de la prise de virages à fortes inclinaisons par le giravion, en roulis notamment, et/ou dans le cas d'un survol par le giravion d'un territoire présentant un relief complexe et varié.

En conséquence eu égard au caractère occasionnel des missions de vol du giravion relevant du transport de charge par élingage, il est traditionnel de monter à bord des giravions des antennes de configuration plane procurant un champ de vision du radioaltimètre optimisé. De telles dispositions permettent en effet de fournir au pilote du giravion une information fiable relative à la hauteur-sol du giravion pour la plupart des missions de vol du giravion excluant le transport de charge par élingage.

Par suite, les antennes planes du radioaltimètre identifient avantageusement un champ de vision optimisé du radioaltimètre, le radioaltimètre étant dans la pratique couramment placé hors service par l'équipage du giravion en cas de transport de charge par élingage.

Une autre solution consiste à remplacer les antennes du radioaltimètre selon ses missions de vol parmi un jeu d'antennes interchangeables. Cependant, de telles opérations sont coûteuses et malaisées à effectuer, et finalement sont peu exploitées dans la pratique.

Il a été proposé dans le domaine général du transport de nombreuses solutions pour monter sur une structure mobile des antennes à radiofréquences avec un champ de vision adapté aux besoins, notamment par réglage de leur orientation ou par un agencement spécifique du radôme. On pourra par exemple se reporter aux documents US6452567 (HARRIS BROADBAND WIRELESS ACCE), US7030834 (HARRIS CORP.) US7088308 (HARRIS CORP.), EP1907882 (BOSCH ROBERT GMBH) et WO2007118211 (ANDREW CORP).

Le document US2005253750 décrit un altimètre radar pour véhicule fonctionnant avec une charge suspendue. Pour maintenir une altitude désirée pendant un vol sans avancement, un véhicule tel qu'un hélicoptère doit détecter une altitude précise au dessus du sol (ALG). L'altimètre radar émet des pulsations radiofréquence (RF) à intervalles réguliers, vers une antenne qui transmet au sol des faisceaux. Ces faisceaux sont ensuite réfléchis et captés par une antenne de cet altimètre radar. Un profil de traitement en charge limite la sensibilité à l'altitude pour certaines distances entre l'altimètre radar et la charge suspendue, afin de réduire les risques de traitement de signaux réfléchis par la charge suspendue. Le radar altimètre sépare les réflexions radar issues de la charge suspendue de celles réfléchies par le sol, sur la base de signatures distinctes de ces réflexions. De portes logiques de suivi d'altitude et d'acquisition d'altitude forment des commutateurs logiques qui ne permettent le traitement de certains exemples de réflexions.

Le document XP035317934 a pour titre: "System architecture of HALAS-a helicopter slung load stabilisation and positionning system", pour auteurs D. Nonnenmacher et al., et a été publié par Deutsches Zentrum für Luft und Raumfahrt, Allemagne, le 10 décembre 2013. Ce document évoque l'emploi de variations d'attitude d'un hélicoptère pour amortir indirectement des mouvements pendulaires d'une charge suspendue sous cet hélicoptère.

Le document US3088109 décrit un radar Doppler de navigation pour indiquer avec précision les composantes de vitesse d'un hélicoptère, y compris en vol stationnaire. L'énergie renvoyée par différents faisceaux d'émission est reçue séparément et les spectres de fréquence respectifs sont traduits dans un intervalle du spectre de fréquence proche d'une fréquence de pistage.

Le document EP1933163 décrit une détection d'obstacle par pointage et mise au point d'ondes émises, pour divers types de mobiles dont les automobiles, trains, embarcations, aéronefs, missiles ou armes de tir automatique. La puissance des signaux émis ou reçu d'un détecteur d'obstacle est amplifiée. La détection d'obstacle prévoit différentes formes de lentille de sortie d'antenne et la possibilité de discriminer suivant différentes orientations. Diverses formes de lentilles sont décrites.

Le document JP3755225 décrit un radio altimètre monté sur un hélicoptère. Pour éviter la correction par annulation d'une mesure altimétrique, un intervalle de temps entre émission et réception d'ondes est pris en compte.

Dans le contexte spécifique susvisé des giravions, la présente invention a pour objet une méthode de mesure de la hauteur-sol d'un giravion au moyen d'un radioaltimètre dont les antennes à radiofréquences de configuration plane procurent un champ de vision optimisé.

Il est plus particulièrement visé par la présente invention de proposer une telle méthode permettant de déterminer de manière fiable la hauteur-sol du giravion dans le cadre de missions de vol occasionnelles relevant du transport de charge par élingage, sans pour autant affecter l'optimisation du champ de vision des antennes à radiofréquences du radioaltimètre lorsque le giravion évolue hors conditions de transport de charge par élingage.

La présente invention a aussi pour objet un radioaltimètre pour giravion comportant des antennes à radiofréquences de configuration plane, apte à la mise en oeuvre d'une telle méthode, ainsi qu'un giravion équipé d'un tel radioaltimètre.

La méthode de la présente invention est une méthode de mesure de la hauteur-sol d'un giravion au moyen d'un radioaltimètre mettant en oeuvre un calculateur déterminant ladite hauteur-sol du giravion à partir de données fournies par un appareillage radioélectrique comprenant au moins un jeu de deux antennes protégées par au moins un radôme. Les antennes sont classiquement de configuration plane et sont implantées sous le giravion considéré en station au sol. Les antennes prédéfinissent typiquement entre elles un champ de vision qualifié de base du radioaltimètre et fournissent lesdites données au calculateur par échange entre elles de signaux électromagnétiques.

Selon la présente invention, il est pris en considération le fait que le giravion est par ailleurs doté d'un matériel d'élingage pour le transport de charge.

Dans ce contexte, la méthode de la présente invention comprend une opération de modification dudit champ de vision de base du radioaltimètre par au moins une lentille, en fonction de l'interférence ou non dans le champ de vision de base du radioaltimètre d'une charge donnée devant être transportée ballante sous le giravion par ledit matériel d'élingage. Une exploitation sélective de ladite au moins une lentille est opérée selon le champ de mobilité de la charge modifiant le champ de vision de base du radioaltimètre selon les modalités suivantes :
-) hors cas de transport de la charge par le matériel d'élingage, il est produit un champ de vision du radioaltimètre de portée optimale prédéfinie, dit champ de vision optimal.
-) en cas de transport de la charge par le matériel d'élingage, il est produit un champ de vision du radioaltimètre, dit champ de vision limité, d'une portée inférieure à la portée du champ de vision optimal. Le champ de vision limité est identifié par exclusion, hors du champ de vision optimal, d'un champ de mobilité préalablement déterminé de ladite charge transportée par le matériel d'élingage, ledit champ de mobilité étant considéré suivant au moins l'axe longitudinal d'extension du giravion.

Il est si besoin précisé que le champ de mobilité de la charge, défini par un cône à titre indicatif de 60° +/-10°, est aisément identifiable selon divers critères comprenant notamment :
-) l'agencement et la position à bord du giravion du matériel d'élingage, prenant notamment en compte la longueur et l'emplacement à bord du giravion de l'élingue porteuse de la charge,
-) les caractéristiques de la charge transportée, prenant notamment en compte son volume, sa masse et/ou sa conformation,
-) les caractéristiques du giravion vis-à-vis de ses capacités de progression lors d'une mission de vol relevant du transport de charge par élingage, prenant notamment en compte sa vitesse d'avancement et ses inclinaisons en tangage et en roulis,
-) voire encore les conditions atmosphériques.

Il est si besoin aussi précisé que ledit champ d'interférence est aisément identifiable d'une part selon le champ de mobilité de la charge et les caractéristiques du champ de vision optimal du radioaltimètre, couramment identifié à titre indicatif par un cône de 140° +/-25° selon l'agencement du giravion, et d'autre part selon la position relative à bord du giravion entre l'appareillage radioélectrique et le matériel d'élingage.

Il est si besoin encore précisé que les notions d'extension longitudinale et transversale du giravion sont des notions relatives classiquement identifiées selon l'orientation du giravion considéré au sol. Le giravion s'étend longitudinalement entre l'avant et l'arrière et transversalement entre ses côtés latéraux.

Il ressort des dispositions de l'invention que lorsque le giravion évolue conformément à une mission de vol relevant du transport de charge par élingage, une restriction du champ de vision optimal exploité hors transport de la charge par élingage, interdit une interférence entre les signaux électromagnétiques échangés entre les antennes et la charge transportée. La restriction du champ de vision optimal du radioaltimètre est procurée au moins suivant l'axe longitudinal d'extension du giravion pour prendre en considération au moins les mouvements de la charge vers l'arrière du giravion où est couramment implanté l'appareillage radioélectrique, tel que sous une poutre de queue équipant couramment un giravion.

Dans le contexte de la présente invention, il est compris que la lentille peut être soit une lentille convergente soit une lentille divergente selon la portée du champ de vision de base du radioaltimètre. Bien entendu tel que typiquement dans le domaine de l'optique, les productions respectives dudit champ de vision optimal et dudit champ de vision limité sont obtenues en exploitant ou non les caractéristiques optiques propres à de telles lentilles convergente ou divergente modifiant le champ de vision de base du radioaltimètre.

Par exemple selon une forme de réalisation, le champ de vision de base du radioaltimètre est susceptible d'être d'une portée équivalente au champ de vision optimal. Dans ce cas, la lentille est une lentille convergente focalisant le champ de vision de base du radioaltimètre pour produire le champ de vision limité, le champ de vision optimal étant produit par neutralisation des effets de la lentille sur le champ de vision de base du radioaltimètre, tel que par exemple visé plus loin par escamotage de la lentille hors du champ de vision de base du radioaltimètre et/ou par retrait de la lentille hors de l'appareillage radioélectrique.

Par exemple encore inversement selon une autre forme de réalisation, le champ de vision de base du radioaltimètre est susceptible d'être d'une portée équivalente au champ de vision limité. Dans ce cas, la lentille est une lentille divergente élargissant le champ de vision de base du radioaltimètre pour produire le champ de vision optimal, le champ de vision limité étant produit par neutralisation des effets de la lentille sur le champ de vision de base du radioaltimètre, tel que par exemple visé plus loin par escamotage de la lentille hors du champ de vision de base du radioaltimètre et/ou par retrait de la lentille hors de l'appareillage radioélectrique.

Plus particulièrement la lentille étant formée par une lentille convergente, une opération de focalisation par la lentille convergente du champ de vision de base du radioaltimètre selon le champ de mobilité de la charge préalablement identifié, procure au radioaltimètre le champ de vision limité. Par ailleurs une opération de neutralisation des effets produits par la lentille convergente sur le champ de vision de base du radioaltimètre, procure au radioaltimètre le champ de vision optimal.

Plus particulièrement encore la lentille étant formée par une lentille divergente, une opération d'élargissement par la lentille divergente du champ de vision de base du radioaltimètre procure au radioaltimètre le champ de vision optimal. Par ailleurs une opération de modification par la lentille divergente du champ de vision de base du radioaltimètre selon le champ de mobilité de la charge préalablement identifié procure au radioaltimètre le champ de vision limité.

La méthode de la présente invention comprend notamment les opérations mentionnées ci-après.

Au cours d'une première étape, un opérateur identifie, notamment par calcul préalablement à l'envol du giravion, un champ de mobilité d'au moins une dite charge donnée devant potentiellement être transportée ballante sous le giravion par ledit matériel d'élingage. Par suite, l'opérateur détermine un champ qualifié d'interférence et identifié par intersection entre le champ de vision optimal et le champ de mobilité de ladite charge donnée. Puis l'opérateur déduit le champ de vision limité excluant, hors du champ de vision optimal, le champ d'interférence considéré suivant au moins l'axe longitudinal d'extension du giravion, voire aussi potentiellement suivant l'axe transversal d'extension du giravion tel que visé plus loin.

Puis au cours d'une deuxième étape et toujours notamment par calcul préalablement à l'envol du giravion, l'opérateur identifie une configuration optique, ou en d'autres termes les caractéristiques optiques, d'au moins une lentille apte à modifier le champ de vision de base du radioaltimètre selon les modalités suivantes :
*) soit par réduction au moyen d'une lentille convergente du champ de vision de base du radioaltimètre audit champ de vision limité dans le cas où le champ de vision de base du radioaltimètre est équivalent au champ de vision optimal,
*) soit par augmentation au moyen d'une lentille divergente du champ de vision de base du radioaltimètre audit champ de vision optimal prédéfini dans le cas où le champ de vision de base du radioaltimètre est équivalent au champ de vision limité du radioaltimètre.

Puis au cours d'une troisième étape, la lentille est sélectivement installée sur l'appareillage radioélectrique en étant mise en oeuvre selon les besoins. Plus particulièrement, ladite au moins une lentille, dont la configuration optique est préalablement identifiée, est sélectivement exploitée ou non selon le champ de vision à procurer au radioaltimètre entre le champ de vision optimal et le champ de vision limité respectivement en l'absence et en présence d'un transport de la charge donnée par le matériel d'élingage.

On comprendra que l'installation ou non de la lentille sur l'appareillage radioélectrique est potentiellement réalisée par un opérateur en atelier pour le cas échéant équiper l'appareillage radioélectrique de ladite au moins une lentille préalablement à l'installation de l'appareillage radioélectrique à bord du giravion, ou encore est potentiellement réalisée par montage sélectif de la lentille à bord du giravion préalablement à son envol.

On relèvera qu'il est préféré de conférer au radioaltimètre le champ de vision limité en tenant compte du champ de mobilité de la charge seulement suivant l'axe longitudinal d'extension du giravion. En effet, la charge ballante transportée par élingage est essentiellement déplacée vers l'arrière du giravion sous l'effet de sa progression, le giravion évoluant communément en assiette stabilisée lors du transport d'une charge par élingage en évitant des manoeuvres de vol de type à prise de virages inclinés.

Dans ce contexte, il est choisi d'optimiser l'étendue du champ de vision optimal conféré au radioaltimètre lorsque le giravion est en prise de virage hors cas de transport de la charge par le matériel d'élingage. En effet lorsque le giravion dépose la charge transportée ou est en mission de déplacement vers un lieu de prise de la charge au sol, il est préférable d'optimiser le champ de vison du radioaltimètre au moins suivant l'axe de roulis.

Cependant, le champ de vision limité peut être procuré non seulement suivant l'axe longitudinal d'extension du giravion, mais aussi suivant l'axe transversal d'extension du giravion pour éventuellement prendre en compte les mouvements possibles de la charge transversalement au giravion, notamment sous l'effet de la prise de virage par le giravion.

Ainsi selon un aspect particulier de la méthode de la présente invention, ledit champ de vision limité est déduit en excluant, hors du champ de vision optimal, ledit champ d'interférence considéré suivant à la fois l'axe longitudinal d'extension du giravion et l'axe transversal d'extension du giravion.

Il se pose alors l'opportunité de procurer une variation de la réduction du champ de vision optimal du radioaltimètre, sélectivement non seulement en cas ou inversement en l'absence de transport de charge par élingage, mais aussi selon différents champs de mobilité potentiels de différentes charges potentiellement transportées par le matériel d'élingage, y compris prenant éventuellement en compte des modalités spécifiques de transport d'une charge donnée par le matériel d'élingage.

En effet, le champ de mobilité d'une charge transportée par élingage varie fréquemment selon la charge transportée et/ou selon les modalités d'installation de la charge sur le matériel d'élingage, voire encore selon l'agencement ponctuel du matériel d'élingage, tel que par exemple en prenant en compte une variation de la longueur de l'élingue utilisée. Dans ce contexte, il est avantageux d'adapter la réduction du champ de vision optimal selon les modalités de transport de charge par élingage appliquées pour une mission de vol donnée du giravion.

A cette fin, il est proposé par la présente invention d'identifier potentiellement plusieurs configurations de réduction du champ de vision optimal, respectivement selon divers champs de mobilité potentiels d'une charge pouvant être transportée par le giravion, pour limiter le champ de vision optimal ponctuellement selon les besoins. De tels besoins sont bien évidemment compris comme étant identifiés pour une mission de vol donnée du giravion en tenant compte du champ de mobilité spécifique d'une charge donnée transportée par élingage sous le giravion selon des modalités de transport prédéfinies.

Plus particulièrement, les opérations mises en oeuvre conformément à la méthode de la présente invention comprennent les dispositions mentionnées ci-après.

Divers champs de mobilité respectivement pour chacune de diverses charges données sont identifiés et par suite divers dits champs de vision limité sont respectivement déduits pour chacun desdits divers champs de mobilité préalablement identifiés. Par suite, diverses configurations optiques de ladite au moins une lentille sont identifiées respectivement selon lesdits divers champs de vision limité. Ladite au moins une lentille de configuration optique préalablement identifiée pour une charge considérée devant notamment être transportée, est exploitée pour conférer au radioaltimètre le champ de vision limité déduit du champ de mobilité de la charge considérée transportée par le matériel d'élingage.

Dans ce contexte, diverses solutions sont proposées pour implanter à bord du giravion au moins une lentille apte à réduire selon les besoins le champ de vision optimal du radioaltimètre.

Selon une première solution, ladite au moins une lentille est sélectionnée parmi un jeu de lentilles interchangeables de configurations optiques respectives préalablement identifiées respectivement selon diverses dites charges données.

Conformément à cette première solution, il est par exemple proposé d'exploiter une lentille convergente focalisant le champ de vision de base du radioaltimètre dont la portée est équivalente au champ de vision optimal. Dans ce cas, la lentille convergente est sélectionnée parmi plusieurs lentilles convergentes d'un jeu de lentilles convergentes dont les configurations optiques respectives ont été définies selon diverses modalités de transport par élingage d'une ou de plusieurs charges données.

Conformément encore à cette solution, il est par exemple proposé d'exploiter une lentille divergente élargissant le champ de vision de base du radioaltimètre dont la portée est équivalente à un champ de vision limité donné. Un tel champ de vision limité donné peut par exemple être obtenu en équipant l'appareillage radioélectrique d'un organe de focalisation spécifique, tel que classiquement agencé en cornet, choisi parmi un jeu d'organes de focalisation spécifiques conférant au radioaltimètre le champ de vision de base fourni par les antennes. Dans ce cas, la lentille divergente est sélectionnée parmi plusieurs lentilles divergentes d'un jeu de lentilles divergentes dont les configurations optiques respectives ont été définies selon les divers champs de vision de base potentiellement fournis par les antennes équipées d'un organe de focalisation spécifique préalablement choisi parmi un jeu d'organes de focalisation spécifiques.

Dans ce contexte, une lentille de configuration optique donnée identifiée compte tenu des conditions de transport par élingage d'une charge donnée et bien évidemment compte tenu du champ de vision de base du radioaltimètre dont la portée est prédéterminée, est temporairement installée sur l'appareillage radioélectrique lorsqu'une mission de vol du giravion relève du transport par élingage d'une charge donnée. Il en ressort que plusieurs lentilles de configurations optiques respectives sont interchangeables selon diverses conditions de transport de charge par élingage préalablement identifiées.

Dans un tel contexte, il est préféré que le remplacement d'une lentille par une autre lentille équipant l'appareillage radioélectrique soit opéré aisément indifféremment en atelier ou à bord du giravion en station au sol par l'intermédiaire de moyens de montage avantageusement facilement réversible. Il est bien évidemment compris que de tels moyens de montage sont des moyens de montage au moins de la lentille, voire aussi du radôme et/ou des antennes, sur l'appareillage radioélectrique et/ou directement sur une paroi extérieure du giravion telle que notamment ménagée par une poutre de queue du giravion.

On relèvera que de tels moyens de montage permettent un retrait aisé de la lentille afin de rétablir le champ de vision de base du radioaltimètre et/ou afin de modifier spécifiquement le champ de vision de base du radioaltimètre par une autre lentille de configuration optique propre adaptée aux besoins.

Selon une deuxième solution, la configuration optique de ladite au moins une lentille est modifiable selon le champ de vision limité du radioaltimètre déduit en fonction d'une charge considérée transportée par le matériel d'élingage..

Plus particulièrement, une lentille est installée à demeure sur l'appareillage radioélectrique et la configuration optique de la lentille est adaptée selon la mission de vol du giravion pour sélectivement adapter le champ de vision du radioaltimètre en cas de transport ou non de charge par élingage et le cas échéant selon les modalités spécifiques de transport par élingage d'une charge donnée.

En effet, il est souhaitable que la configuration optique d'une même lentille équipant l'appareillage radioélectrique soit aisément adaptable selon les besoins. A cette fin, il est proposé les dispositions suivantes considérées isolément ou en combinaison entre deux quelconques au moins d'entre elles :
-) soit d'installer sur l'appareillage radioélectrique au moins une lentille dont la configuration optique est figée. Dans ce cas, la lentille est sélectionnée parmi un jeu de lentilles interchangeables de configuration optiques respectives. Les configurations optiques des lentilles du jeu sont notamment définies tel que précédemment visé respectivement selon le transport ou non d'une charge par le matériel d'élingage et le cas échéant selon diverses modalités de transport par élingage de la charge pouvant être appliquées.
-) soit d'équiper au moins une dite lentille avec des moyens de modification de sa configuration optique selon les besoins. Dans ce cas, la configuration optique de ladite au moins une lentille est modifiable selon le champ de vision limité du radioaltimètre préalablement déduit conformément aux modalités appliquées de transport ou non par élingage d'une dite charge donnée,
-) soit d'installer mobile par rapport aux antennes ladite au moins une lentille sur l'appareillage radioélectrique. Dans ce cas, ladite au moins une lentille est sélectivement manoeuvrable entre une position active dans laquelle la lentille modifie le champ de vision de base du radioaltimètre et une position escamotée dans laquelle la lentille, dégagée des antennes, est sans effet sur le champ de vision de base du radioaltimètre.

Une modification de la configuration optique et/ou de la position de ladite au moins une lentille par rapport aux antennes permet de modifier et/ou d'interrompre la modification du champ de vision de base du radioaltimètre. De telles modifications et/ou interruptions des effets produits par la lentille peuvent être opérées, de préférence en vol par un personnel du giravion, entre une situation de transport de charge dans laquelle le giravion transporte une charge par élingage et une situation commune de vol du giravion dans laquelle le giravion est libéré d'un transport de charge par élingage.

La présente invention a aussi pour objet un radioaltimètre pour giravion apte à la mise en oeuvre d'une méthode telle qu'elle vient d'être décrite.

Le radioaltimètre comprend un calculateur de détermination de la hauteur-sol d'un giravion à partir de données fournies par un appareillage radioélectrique comprenant au moins un jeu de deux antennes de configuration plane et un radôme de protection des antennes, notamment vis-à-vis de l'environnement extérieur. Les antennes prédéfinissent classiquement entre elles un champ de vision qualifié de base du radioaltimètre et fournissent au calculateur lesdites données par échange de signaux électromagnétiques.

Selon la présente invention, un tel radioaltimètre est principalement reconnaissable en ce que l'appareillage radioélectrique comprend en outre au moins une lentille de modification dudit champ de vision de base du radioaltimètre défini par lesdites antennes de configuration plane.

Ladite lentille est potentiellement soit une lentille convergente de focalisation du champ de vision de base du radioaltimètre soit une lentille divergente d'augmentation du champ de vision de base du radioaltimètre.

Selon une forme particulière de réalisation du radioaltimètre, ladite lentille est intégrée au radôme, dit alors radôme optique.

Par exemple, le radôme optique est avantageusement formé d'au moins deux couches comprenant une couche extérieure en matériau cellulaire imperméable enveloppant une couche intérieure formant la lentille.

Le radôme optique est notamment issu de matériaux composites couramment utilisés dans le domaine de l'aéronautique. La couche extérieure est une couche de protection de la lentille, par exemple issue d'une mousse synthétique, faisant notamment obstacle au passage à son travers de l'humidité afin d'éviter une corrosion de la lentille et/ou une dégradation de ses performances.

Il est à relever qu'un tel radôme optique présente l'avantage de ne quasiment pas accroître la masse du giravion par suite de son implantation à bord.

La couche intérieure formant la lentille est potentiellement noyée à l'intérieur de la couche extérieure, en étant par exemple issue d'une résine époxyde ou en étant en verre pour favoriser sa fonction de modification du champ de vision de base du radioaltimètre.

Selon une forme de réalisation, ladite au moins une lentille et le radôme, voire aussi les antennes, sont rassemblés dans un même ensemble structurel muni de moyens d'assemblage réversible à un châssis extérieur au radioaltimètre.

Il est bien évidemment compris que ledit châssis extérieur ne constitue pas un organe propre au radioaltimètre, mais détermine classiquement des modalités d'agencement desdits moyens d'assemblage réversible procurant un montage de l'appareillage radioélectrique sur un élément extérieur, tel que notamment une paroi extérieure d'un aéronef.

Par ailleurs, il n'est pas à exclure le fait que la lentille peut dans certains cas renvoyer vers l'antenne émettrice des ondes électromagnétiques, dites ondes réfléchies, par suite de la réception par la lentille d'ondes électromagnétiques, dites ondes incidentes, issues des signaux radioélectriques émis par l'antenne émettrice, ces ondes électromagnétiques étant transmises vers la lentille. Cependant, de telles ondes réfléchies peuvent dégrader les performances de l'appareillage radioélectrique et rendre le calibrage du radioaltimètre fragile en augmentant le taux d'ondes électromagnétiques stationnaires entre l'antenne émettrice de configuration plane et la lentille.

Pour éviter un tel inconvénient, il est proposé en cas de besoin une forme spécifique de réalisation de l'invention selon laquelle la lentille est munie d'une couche spécifique, dite couche filtrante. Ladite couche filtrante est génératrice d'un déphasage entre les ondes réfléchies pour les rendre évanescentes, de sorte que la pertinence des signaux électromagnétiques générés par l'antenne émettrice n'en soit pas affectée.

Par exemple, ladite couche filtrante est ménagée à la surface extérieure de la lentille au moins dans sa partie orientée vers l'antenne émettrice. Une telle couche filtrante est potentiellement formée, isolément ou en combinaison :
-) d'un revêtement de couverture de la lentille, en étant notamment issu d'un matériau spécifique apte à produire ledit déphasage entre les ondes réfléchies,
-) d'un relief spécifique intégré à la lentille et provoquant ledit déphasage entre les ondes réfléchies, tel qu'un relief conformé en une succession de saillies et de creux en étant par exemple constitué d'une succession de rainures ménageant des gorges entre elles.

Le radioaltimètre peut être avantageusement équipé d'un moyen, qualifié de réglage de la lentille, apte à modifier les effets de la lentille sur le champ de vision de base du radioaltimètre.

Selon une forme de réalisation, le moyen de réglage de la lentille est un moyen de modification de la configuration optique de la lentille. Ladite modification de la configuration optique de la lentille modifie bien évidemment ses caractéristiques optiques.

Un tel moyen de modification de la configuration optique de la lentille est par exemple un moyen de régulation d'une circulation de fluide à l'intérieur de la lentille modifiant ses caractéristiques optique.

Par exemple, la lentille est formée de plusieurs strates ménageant entre elles au moins une poche à circulation de fluide, une circulation de fluide à l'intérieur de ladite au moins une poche modifiant la configuration optique de la lentille. Bien évidement la conformation de ladite poche au moins conférée selon la conformation et/ou l'agencement des strates entre-elles est adaptée selon la modification, à obtenir au moyen de la lentille, de la portée du champ de base du radioaltimètre.

Selon une autre forme de réalisation, le moyen de réglage de la lentille est un moyen de déplacement relatif entre les antennes et la lentille montée mobile sur l'appareillage radioélectrique.

Le radioaltimètre peut encore être avantageusement équipé d'un moyen, qualifié d'escamotage de la lentille, apte à déplacer la lentille par rapport aux antennes. La lentille est montée mobile sur l'appareillage radioélectrique entre une position active dans laquelle la lentille modifie le champ de vision de base du radioaltimètre et une position escamotée dans laquelle la lentille est placée hors du champ de vision de base du radioaltimètre et par suite est sans effet sur le champ de vision de base du radioaltimètre.

Dans ce contexte, la modification par la lentille du champ de vision de base du radioaltimètre peut être adaptée en vol selon les besoins volontairement par un personnel d'équipage ou spontanément par des moyens automatisés. Une telle adaptation de la lentille est notamment opérée selon la mission de vol du giravion porteur ou non d'une charge par élingage et/ou selon le champ de mobilité de la charge transportée par élingage devant être pris en considération.

Les caractéristiques de modification du champ de vision du radioaltimètre par la lentille sont ainsi potentiellement adaptées, isolément ou en combinaison, par adaptation selon les besoins de la distance focale de la lentille, de l'orientation de la lentille, de la conformation de la lentille, des propriétés optiques du matériau constitutif de la lentille, voire encore des propriétés physiques ou chimiques du matériau constitutif de la lentille.

Plus particulièrement selon une forme de réalisation, la lentille est montée mobile sur un support de l'appareillage radioélectrique et est déplaçable par des moyens de manoeuvre participants de l'un quelconque au moins du moyen de réglage de la lentille et du moyen d'escamotage de la lentille.

Les moyens de manoeuvre de la lentille sont indifféremment des moyens de manoeuvre manuelle de la lentille par un opérateur et/ou des moyens de manoeuvre automatisée de la lentille. De tels moyens de manoeuvre automatisée comprennent notamment au moins un actionneur dont la mise en oeuvre est placée sous la dépendance de moyens de commande.

Lesdits moyens de commande sont susceptibles de comprendre indifféremment, isolément ou en combinaison, des moyens de commande manuelle activables par un opérateur et/ou des moyens de commande automatisée activables par réception d'une consigne qualifiée d'activation des moyens de commande. Une telle consigne d'activation est notamment générée par un organe de calcul équipant le radioaltimètre identifiant les effets à produire par la lentille sur le champ de vision de base du radioaltimètre.

Par ailleurs, il est à relever que le calculateur du radioaltimètre comprend couramment un algorithme principal calculant la hauteur-sol du giravion à partir desdites données fournies par l'appareillage radioélectrique.

Dans ce contexte selon une forme avantageuse de réalisation, le calculateur du radioaltimètre comporte en outre un algorithme annexe, potentiellement intégré à l'algorithme principal, prenant en compte les effets spécifiquement produits par la lentille sur le champ de vision du radioaltimètre. De telles dispositions permettent d'améliorer la fenêtre de détection de la hauteur-sol par le radioaltimètre par suite de la mise en oeuvre de la lentille.

La présente invention a aussi pour objet un giravion équipé d'un radioaltimètre et apte à la mise en oeuvre d'une méthode tels qu'ils viennent d'être décrits.

Le giravion est plus particulièrement équipé d'un dit radioaltimètre comprenant ledit calculateur identifiant la hauteur-sol du giravion à partir desdites données fournies par un dit appareillage radioélectrique comprenant au moins un dit jeu de deux antennes coopérant par échange de signaux électromagnétiques.

Les antennes sont classiquement de configuration plane pour optimiser l'étendue du champ de vision du radioaltimètre lorsque le giravion n'est pas porteur de charge par élingage. Les antennes sont implantées sous le giravion considéré en station au sol en étant protégées par au moins un dit radôme. Les antennes définissent classiquement entre elles un dit champ prédéfini de vision qualifié de base du radioaltimètre.

Le giravion de la présente invention est par ailleurs équipé d'un dit matériel d'élingage pour le transport sous le giravion d'une dite charge ballante dans un dit champ de mobilité donné préalablement identifié.

Dans ce contexte, le giravion de la présente invention est principalement reconnaissable en ce que l'appareillage radioélectrique comprend au moins une dite lentille de modification du champ de vision de base du radioaltimètre suivant au moins l'axe longitudinal d'extension du giravion. La lentille modifie le champ de vision de base du radioaltimètre conformément :
-) hors cas de transport de ladite charge par le matériel d'élingage, à une optimisation du champ de vision du radioaltimètre lui conférant alors un champ de vision prédéfini, dit champ de vision optimal, et
-) en cas de transport de ladite charge par le matériel d'élingage, à une réduction dudit champ de vision optimal conférant alors au radioaltimètre un champ de vision, dit champ de vision limité, en fonction du champ de mobilité de ladite charge transportée ballante sous le giravion.

Selon une forme de réalisation relative par exemple à une lentille convergente de focalisation du champ de vision de base du radioaltimètre, la surface de focalisation de la lentille modifiant le champ de vision de base du radioaltimètre est convexe suivant l'axe longitudinal et l'axe transversal d'extension du giravion. Dans ce contexte, il est choisi de restreindre le champ de vision optimal du radioaltimètre suivant l'ensemble des dimensions définissant le plan longitudinal d'extension du giravion.

Cependant tel que précédemment mentionné, il est préféré d'élargir au mieux le champ de vision du radioaltimètre lorsque le giravion est en prise de virage en l'absence de transport de charge par le matériel d'élingage.

C'est pourquoi selon une forme préférée de réalisation relative par exemple à une lentille convergente de focalisation du champ de vision de base du radioaltimètre, la surface de la lentille modifiant le champ de vision de base du radioaltimètre est convexe suivant l'axe longitudinal d'extension du giravion et est essentiellement plane suivant l'axe transversal d'extension du giravion.

Dans ce contexte, il est préféré de pourvoir la lentille de bords arrondis. Lesdits bords arrondis sont ménagés aux extrémités de la surface de la lentille modifiant le champ de vision de base du radioaltimètre, lesdites extrémités étant considérées suivant l'axe transversal d'extension du giravion. De tels bords arrondis de la lentille permettent d'éviter des diffractions indésirables qui peuvent dégrader le diagramme de fonctionnement des antennes.

Bien évidemment de telles dispositions propres à une lentille convergente visant à modifier le champ de vision de base du radioaltimètre sélectivement suivant l'axe longitudinal et/ou l'axe transversal d'extension du giravion sont appliquées dans le cas où le champ de vision de base du radioaltimètre est d'une portée équivalente au champ de vision optimal.

Dans le cas où le champ de vision de base du radioaltimètre est d'une portée équivalente au champ de vision limité, une lentille divergente est alors utilisée pour inversement obtenir le champ de vision optimal lors de sa mise en oeuvre.

A partir des règles précédemment énoncées de conformation de la lentille convergente vis-à-vis de l'axe longitudinal et/ou transversal du giravion, une transposition de telles règles à une lentille divergente est bien évidemment adaptée pour obtenir un élargissement du champ de vision de base, alors équivalent au champ de vision limité. La conformation de la lentille divergente procurant un élargissement du champ de vision de base est déduite par adaptation aisée desdites règles en appliquant les lois optiques connues, bien évidemment en fonction de la portée du champ de vision de base considérée vis-à-vis de l'axe longitudinal et/ou de l'axe transversal d'extension du giravion procurant les avantages précédemment mentionnés concernant l'évolution du giravion en tangage et/ou en roulis en cas de transport ou non d'une charge par le matériel d'élingage.

Cependant, les missions de vol d'un giravion ne sont pas toujours limitées au transport de charges par élingage, exception faite des giravions structurellement organisés spécifiquement à cet effet.

L'intérêt optimal de l'invention est de pouvoir adapter le champ de vision du radioaltimètre selon les missions de vol marginales du giravion, de sorte que le champ de vision courant du radioaltimètre soit modifié occasionnellement par la lentille en cas d'une mission de vol inhabituelle.

Par exemple dans le cas où le transport de charge par élingage relève d'une mission de vol occasionnelle du giravion, il est préféré d'exploiter une lentille convergente focalisant le champ de vision de base du radioaltimètre, dans ce cas équivalent au champ de vision optimal utilisé plus fréquemment par le giravion.

Par exemple encore dans le cas inverse où le transport de charge par élingage relève d'une mission de vol fréquente du giravion, il est préféré d'exploiter une lentille divergente élargissant le champ de vision de base du radioaltimètre, dans ce cas équivalent à un champ de vision limité plus fréquemment utilisé par le giravion. Il doit être dans ce cas considéré que les caractéristiques de la lentille divergente peuvent être avantageusement adaptées tel que précédemment visé selon les besoins.

Néanmoins d'une manière générale, il est proposé une forme particulière de réalisation selon laquelle il est permis à un opérateur de pouvoir aisément monter et retirer la lentille à bord du giravion en fonction de la mission de vol du giravion.

Il est aussi proposé une autre forme particulière de réalisation selon laquelle la lentille est montée escamotable sur l'appareillage radioélectrique entre une position active dans laquelle la lentille modifie le champ de vision de base du radioaltimètre et une position escamotée dans laquelle la lentille n'interfère pas sur le champ de vision de base du radioaltimètre.

Plus particulièrement selon une forme de réalisation, la lentille est montée amovible sur l'appareillage radioélectrique en étant interchangeable parmi un jeu de lentilles de configurations optiques respectives.

Le montage amovible de la lentille permet son implantation ou non à bord du giravion, voire procure la possibilité de remplacer une lentille de configuration optique donnée par une autre lentille choisie parmi un jeu de lentilles de configurations optiques individuelles spécifiques. Une lentille peut être sélectionnée par un opérateur parmi les lentilles dudit jeu de lentilles et être aisément installée au sol à bord du giravion selon les besoins, et notamment selon le transport ou non de la charge par élingage, et/ou le cas échéant selon les modalités de transport par élingage de la charge définissant son champ de mobilité.

Par ailleurs, il est à éviter de dégrader les surfaces extérieures du giravion pour le montage de la lentille, voire d'affecter l'étanchéité procurée par l'appareillage radioélectrique pour préserver les antennes d'une infiltration d'humidité.

A cet effet et selon une forme de réalisation, la lentille est potentiellement montée amovible sur l'appareillage radioélectrique au moins partiellement par l'intermédiaire de moyens de fixation des antennes sur une paroi extérieure du giravion.

De tels moyens de fixation sont classiquement formés par des organes de fixation, tels qu'agencés en vis ou en organes d'emboîtement élastiquement déformables par exemple. De tels organes de fixation peuvent être exploités pour fixer la lentille en évitant de dégrader la paroi extérieure du giravion par des moyens de fixation propres à la lentille pour son montage à bord du giravion.

Bien évidemment, il est compris que la lentille est potentiellement interchangeable par remplacement du radôme optique sélectionné parmi un jeu de plusieurs radômes optiques intégrant respectivement des lentilles de structures différenciées. En outre, un radôme optique peut être aisément retiré pour être remplacé par un radôme exempt de lentille lorsqu'une modification du champ de vision de base du radioaltimètre est inutile.

Dans ce contexte, il est à considérer que l'appareillage radioélectrique comprend potentiellement soit un premier module regroupant au moins les antennes et la lentille, soit un deuxième module rassemblant en un même ensemble structurel les antennes, la lentille et le radôme.

On relèvera aussi le fait que chacune des antennes est potentiellement équipée individuellement d'une lentille ou le fait que les antennes sont potentiellement équipées d'une lentille commune.

Tel que précédemment visé, le radioaltimètre équipant le giravion est potentiellement équipé de dits moyens de commande automatisée.

Dans ce cas, le matériel d'élingage est avantageusement équipé de moyens de détection d'une charge portée par le matériel d'élingage. De tels moyens de détection comprennent par exemple des moyens dynamométriques équipant le matériel d'élingage et mesurant les efforts supportés par l'élingue.

Lesdits moyens de détection participent dudit organe de calcul équipant le radioaltimètre et sont des moyens générateurs de ladite consigne d'activation des moyens de commande par suite d'un largage de la charge transportée. La génération par lesdits moyens de détection de la consigne d'activation des moyens de commande provoque la mise en oeuvre du dit moyen d'escamotage de la lentille déplaçant la lentille entre ladite position active et ladite position escamotée.

Ces dispositions sont telles qu'une détection d'un largage de la charge transportée par le giravion provoque spontanément une manoeuvre entre la position active et la position escamotée, une manoeuvre de la lentille en position escamotée rétablissant le champ de vision de base du radioaltimètre. Dans ce contexte, il est à considérer, en l'absence de transport de charge par élingage, que l'escamotage d'une lentille convergente procure le champ de vision optimal ménagé par le champ de vision de base du radioaltimètre et inversement que l'escamotage d'une lentille divergente procure le champ de vision limité ménagé par le champ de vision de base du radioaltimètre.

Toujours dans le cas où le radioaltimètre est équipé de dits moyens de commande automatisée, le calculateur participe dudit organe de calcul équipant le radioaltimètre en étant potentiellement générateur de ladite consigne d'activation des moyens de commande provoquant la mise en oeuvre des dits moyens d'escamotage déplaçant la lentille entre ladite position escamotée vers ladite position active.

La génération par le calculateur de ladite consigne d'activation est notamment provoquée par suite d'une détection par le calculateur d'une hauteur-sol identifiant le transport d'une charge par élingage à partir des données fournies par l'appareillage radioélectrique, notamment par détection par le calculateur d'une réflexion des signaux radioélectriques échangés entre les antennes sur la charge transportée par élingage.

En effet, le radioaltimètre est apte à identifier une interférence entre les signaux échangés par les antennes et une charge transportée par élingage dès lors que la hauteur-sol déduite par le radioaltimètre correspond sensiblement à la distance de séparation connue entre l'appareillage radioélectrique et la charge.

Des exemples de réalisation de la présente invention vont être décrits en relation avec les figures des planches annexées, dans lesquelles :
- la fig.1 et la fig.2 sont des illustrations respectivement de profil et en perspective d'un giravion équipé d'un radioaltimètre conforme à la présente invention, la fig.1 comprenant deux détails (a) et (b) représentant des organes spécifiques du radioaltimètre.
- la fig.3 est composée de trois schémas (c), (d) et (e) illustrant respectivement diverses modalités de mise en oeuvre d'une méthode de la présente invention.
- la fig.4 est un schéma illustrant une méthode conforme à la présente invention et représentant des modalités générales de mise en oeuvre du radioaltimètre équipant le giravion représenté sur les fig.1 et fig.2.
- la fig.5 est un schéma illustrant des modalités particulières relevant d'une méthode conforme à la présente invention.
- la fig.6 est composée de plusieurs schémas illustrant un exemple de réalisation d'une lentille équipant un radioaltimètre conforme à la présente invention, respectivement en perspective sur le schéma (f), de profil transversal sur le schéma (g) et de profil longitudinal pour le schéma (h),
- la fig.7 est composée de deux schémas (i) et (j) illustrant respectivement divers exemples de réalisation d'une lentille équipant un radioaltimètre conforme à la présente invention,
- les fig.8, fig.9 et fig.10 sont des illustrations respectivement de divers exemples de modalités de montage à bord d'un giravion d'une lentille équipant un radioaltimètre conforme à la présente invention,
- les fig.11, fig.12, fig.13 et fig.14 sont des illustrations respectivement de divers exemples de modalités de manoeuvre d'une lentille équipant un radioaltimètre conforme à la présente invention.
- la fig.15 est composée de deux schémas (k) et (I) illustrant respectivement divers exemples de réalisation d'une forme spécifique de réalisation d'une lentille équipant un radioaltimètre conforme à la présente invention.

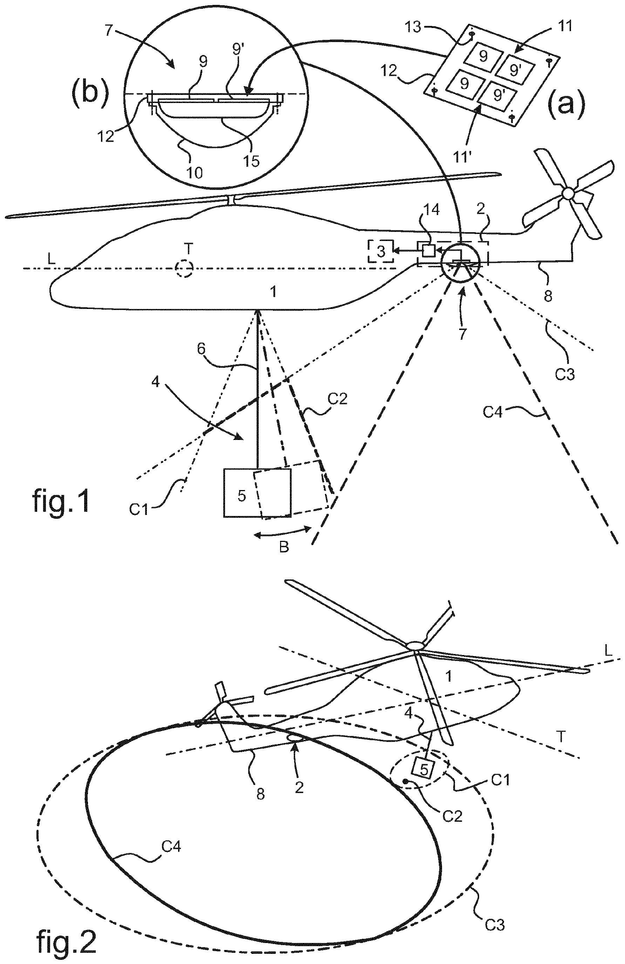

Sur les fig.1 et fig.2, un giravion est équipé d'un radioaltimètre 2 fournissant à l'équipage du giravion des informations relatives à la hauteur-sol du giravion 1, notamment par voie d'affichage (voir écran 3 sur la fig.1). Le giravion 1 est par ailleurs équipé d'un matériel d'élingage 4 pour le transport d'une charge 5 portée ballante sous le giravion 1 à l'extrémité libre d'une élingue 6 fixée à bord du giravion 1 à son autre extrémité par l'intermédiaire d'un treuil notamment.

On notera que le giravion 1 s'étend classiquement suivant une orientation longitudinale L définie entre l'avant et l'arrière du giravion 1 considéré posé au sol et suivant une orientation transversale T définie perpendiculaire à ladite orientation longitudinale L du giravion 1 en s'étendant entre ses côtés latéraux.

Sur la fig.1 plus particulièrement, le radioaltimètre 2 comprend classiquement un appareillage radioélectrique 7, tel que par exemple illustré sur le schéma (b). L'appareillage radioélectrique 7 est couramment implanté sous une poutre de queue 8 du giravion 1, tel que selon l'exemple de réalisation illustré sur les fig.1 et fig.2.

Sur le schéma (b) notamment, l'appareillage radioélectrique 7 comprend au moins un jeu de deux antennes 9, 9' protégées de l'environnement extérieur au giravion 1 par un radôme 10. L'appareillage radioélectrique 7 comprend potentiellement plusieurs jeux 11, 11' de deux antennes 9, 9', tels qu'au nombre de deux sur l'exemple de réalisation illustré sur le schéma (a).

Plus particulièrement sur le schéma (a), les antennes 9, 9' d'un jeu 11, 11' sont installées sur un support 12 de montage des antennes 9, 9' à bord du giravion. Les antennes 9, 9' sont typiquement implantées sur le giravion par fixation du support 12 sur la paroi extérieure du giravion, par l'intermédiaire de moyens de fixation 13 tels que des vis par exemple.

Les antennes 9, 9' sont de configuration plane pour définir entre elles un champ de vision de base du radioaltimètre. Les antennes 9, 9' d'un même jeu 11, 11' coopèrent entre elles par échange de signaux électromagnétiques pour générer des données exploitées par un calculateur 14 du radioaltimètre 2 (voir fig.1) déterminant la hauteur-sol du giravion 1.

Typiquement, la charge 5 est transportée ballante B sous le giravion 1 par le matériel d'élingage 4, et par suite est mouvante sous le giravion 1 dans un champ de mobilité C1 prédéfini. Plus particulièrement sous l'effet de la progression vers l'avant du giravion, la charge se déplace essentiellement vers l'arrière du giravion à l'intérieur dudit champ de mobilité C1.

Un tel champ de mobilité C1 est susceptible de varier, notamment selon l'organisation du matériel d'élingage 4, selon la position relative entre le matériel d'élingage 4 et l'appareillage radioélectrique 7, selon les caractéristiques propres de la charge 5 transportée, telle que sa masse et sa conformation notamment, ainsi que selon la structure du giravion 1 et notamment ses capacités de propulsion.

Sur l'exemple de réalisation illustré sur les fig.1 et fig.2, le champ de vision de base du radioaltimètre 2 fourni par les antennes 9,9' est plus particulièrement un champ de vision optimal C3, dont la portée est la plus vaste possible. Dans le cas où le giravion 1 ne transporte pas de charge 5 au moyen du matériel d'élingage 4, de telles disposition permettent d'accroître la faculté du radioaltimètre 2 à mesurer la hauteur-sol du giravion 1 quelle que soit son attitude en vol en tangage et/ou en roulis, notamment y compris lors de la prise de virage à fortes inclinaison.

Dans ce contexte, il apparait sur la fig.1 que la charge 5 transportée par élingage peut interférer avec les signaux échangés entre les antennes 9, 9'. Pour éviter une telle interférence, un champ C2, qualifié d'interférence, peut être défini par intersection entre le champ de vision optimal C3 du radioaltimètre 2 et le champ de mobilité C1 de la charge 5. Lorsque la charge 5 pénètre à l'intérieur du champ de vision optimal C3 du radioaltimètre 2, les données fournies par les antennes 9, 9' ne sont plus fiables en raison de l'interférence potentielle de la charge 5 avec les signaux échangés entre les antennes 9, 9'.

Pour obtenir au moyen du radioaltimètre 2 une mesure fiable de la hauteur-sol du giravion 1 lors d'un transport de charge 5 par élingage, l'appareillage radioélectrique 7 comporte en outre une lentille 15 (voir schéma b) modifiant le champ de vision de base du radioaltimètre 2 et plus spécifiquement sur l'exemple illustré le champ de vision optimal C3 du radioaltimètre 2 fourni par les antennes 9,9'.

Dans ces conditions, la lentille 15 est plus particulièrement sur l'exemple illustré une lentille convergente focalisant le champ de vision de base du radioaltimètre 2. La configuration optique de la lentille 15 est préalablement déterminée conformément à l'obtention d'une réduction du champ de vision de base du radioaltimètre 2 ménageant le champ de vision optimal. Plus particulièrement, la lentille 15 est exploitée pour réduire la portée du champ de vision optimal C3 du radioaltimètre 2 à un champ de vision C4 limité du radioaltimètre 2. Un tel champ de vision limité C4 du radioaltimètre est illustré sur les fig.1 et fig.2 et est défini par exclusion du champ de mobilité C1 de la charge hors du champ de vision optimal C3 du radioaltimètre 2.

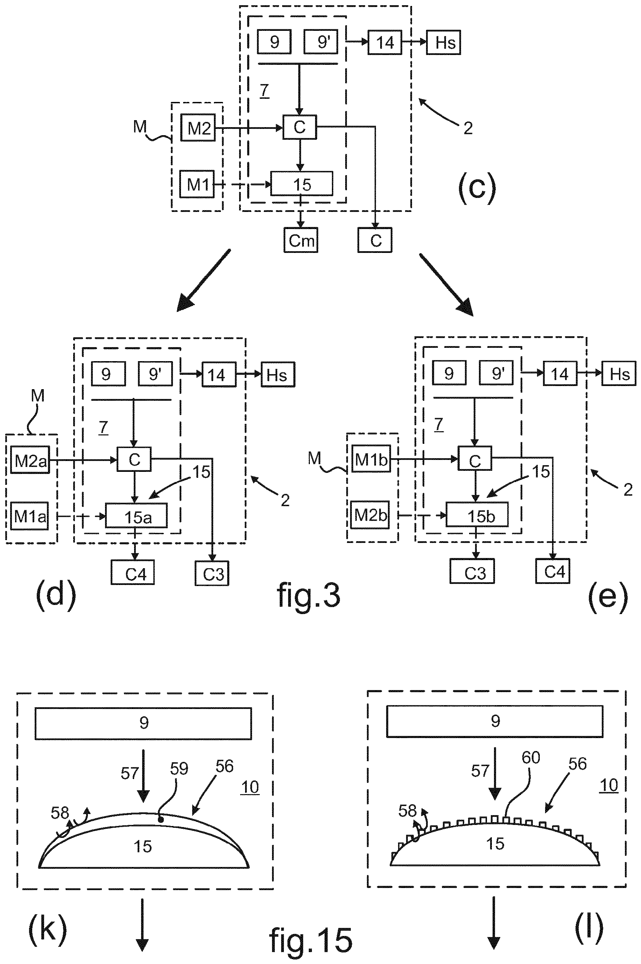

Tel qu'illustré sur la fig.3, il est cependant compris que selon une approche générale de la présente invention, la lentille 15 peut être une lentille convergente 15a (schéma d) ou une lentille divergente 15b (schéma e) selon la portée du champ de vision de base C du radioaltimètre 2.

Sur les différents schémas de la fig.3 et tel que précédemment mentionné en relation avec les fig.1 et fig.2, le radioaltimètre 2 comprend un appareillage radioélectrique 7 mettant en oeuvre le calculateur 14 et les antennes 9,9' de configuration plane fournissant le champ de vision de base C du radioaltimètre 2, afin de procurer la hauteur sol Hs du giravion à l'instrumentation de bord équipant le giravion.

Cependant, les missions de vol M du giravion peuvent être différentes, les missions du giravion pouvant relever ou non d'un cas de transport d'une charge par le matériel d'élingage. Sur les schémas de la fig.3, il est pris en considération une mission de vol M1 du giravion et une mission de vol M2 du giravion qui diffèrent l'une de l'autre selon le cas de transport ou non d'une charge par le matériel d'élingage équipant le giravion.

Sur le schéma (c) illustrant une approche générale de la présente invention, la lentille 15 est sélectivement exploitée pour modifier le champ de vision de base C du radioaltimètre 2 selon la mission de vol du giravion. Dans le cas de la mission de vol M2, la lentille 15 n'est pas exploitée pour modifier le champ de vision de base C du radioaltimètre 2. Dans le cas de la mission de vol M1, la lentille 15 est exploitée pour modifier le champ de vision de base C du radioaltimètre, dont la portée est alors modifiée conformément à l'obtention d'un champ de vision qualifié de modifié Cm.

A partir de ladite approche générale illustrée sur le schéma (c), il est distingué respectivement sur les schémas (d) et (e) diverses modalités de mise en oeuvre de la méthode de la présente invention selon les objectifs respectifs des missions de vol M1 ou M2.

Plus particulièrement sur le schéma (d), les antennes 9,9' procurent au radioaltimètre un champ de vision de base C équivalent au champ de vision optimal C3. Dans ce contexte, il est considéré que la mission de vol M1 du giravion est une mission de vol M1a relevant d'un cas de transport d'une charge par le matériel d'élingage du giravion. Inversement il est aussi considéré que la mission de vol M2 du giravion est une mission de vol M2a relevant d'un cas hors transport d'une charge par le matériel d'élingage du giravion.

Dans le contexte illustré sur le schéma (d), dans le cas où la mission de vol M du giravion est la mission de vol M1a, la lentille 15 est plus spécifiquement formée d'une lentille convergente 15a focalisant le champ de vision de base C du radioaltimètre 2 équivalent au champ de vision optimal C3. Par suite d'une exploitation de la lentille 15a, le champ de vision modifié Cm est le champ de vision limité C4. Inversement dans le cas où la mission de vol M du giravion est la mission de vol M2a, la lentille convergente 15a n'est pas exploitée et par suite le champ de vision de base C du radioaltimètre est conservé pour calculer la hauteur-sol Hs du giravion.

Plus particulièrement encore sur le schéma (e), les antennes 9,9' procurent au radioaltimètre un champ de vision de base C équivalent à un champ de vision limité C4. Dans ce contexte, il est considéré que la mission de vol M1 du giravion est une mission de vol M1b relevant d'un cas hors transport d'une charge par le matériel d'élingage du giravion. Inversement il est aussi considéré que la mission de vol M2 du giravion est une mission de vol M2b relevant d'un cas de transport d'une charge par le matériel d'élingage du giravion.

Dans le contexte illustré sur le schéma (e), dans le cas où la mission de vol M du giravion est la mission de vol M2b, la lentille 15 est plus spécifiquement formée d'une lentille divergente 15b élargissant le champ de vision de base C du radioaltimètre 2 équivalent au champ de vision limité C4. Par suite d'une exploitation de la lentille 15b, le champ de vision modifié Cm est le champ de vision optimal C3. Inversement dans le cas où la mission de vol M du giravion est la mission de vol M1 b, la lentille divergente 15b n'est pas exploitée et par suite le champ de vision de base C du radioaltimètre est conservé pour calculer la hauteur-sol Hs du giravion.

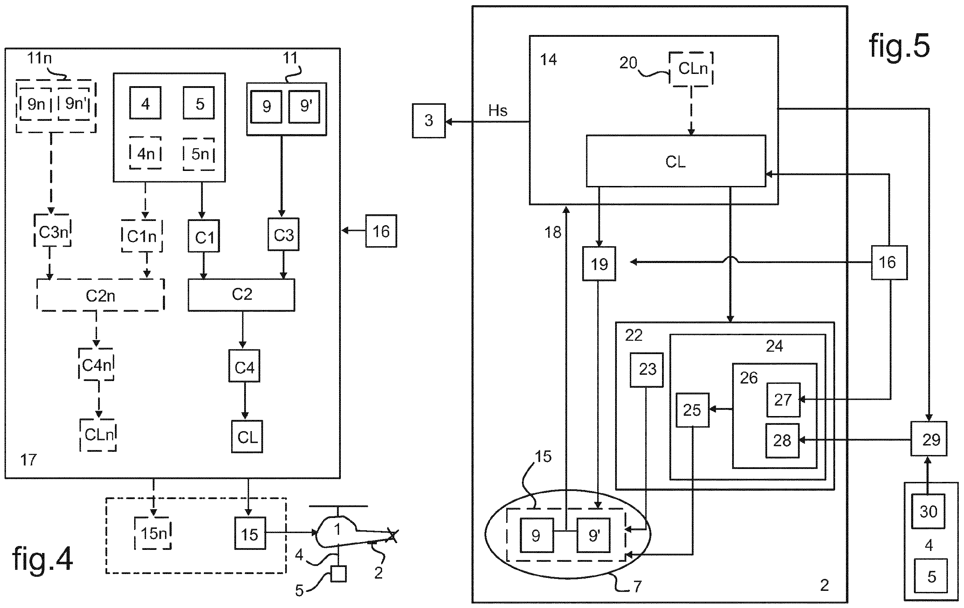

Pour éviter par la suite une redondance de description de l'invention, les fig.4 à fig.15 illustrent respectivement l'invention en tenant compte d'une exploitation d'une lentille 15 formée d'une lentille convergente 15a focalisant le champ de vision de base C du radioaltimètre 2 équivalent au champ de vision optimal C3. Il est en effet à prendre en compte que les modalités particulières de l'invention respectivement décrites en relation avec les fig.4 à fig.15 sont transposables sans difficulté en étant adaptées à l'exploitation d'une lentille 15 formée par une lentille divergente 15b élargissant le champ de vision de base C du radioaltimètre 2 équivalent à un champ de vision limité donné C4.

Sur la fig.4, le giravion 1 est équipé du radioaltimètre 2 tel qu'illustré sur les fig.1 et fig.2. Pour éviter une interférence entre la charge 5 transportée et les signaux échangés par le radioaltimètre 2 au moyen de la lentille 15, il est proposé d'effectuer les opérations mentionnées ci-après.

Préalablement à l'envol du giravion 1, un opérateur 16 identifie au moyen d'une unité de calcul 17 au moins un champ de mobilité C1 d'une charge 5 prédéfinie devant être transportée par le matériel d'élingage 4 équipant le giravion 1.

Puis l'opérateur 16 identifie le champ d'interférence C2 par intersection entre le champ de mobilité C1 de la charge 5 et le champ de vision optimal C3 du radioaltimètre 2 fourni par les antennes 9,9'. Par suite, l'opérateur 16 identifie le champ de vision limité C4 du radioaltimètre et la configuration optique CL de la lentille 15 propre à focaliser le champ de vision optimal C3 du radioaltimètre 2 pour le réduire au champ de vision limité C4 du radioaltimètre 2. La lentille 15 est alors installée sur le giravion 1.

On relèvera à ce stade de la description que plusieurs configurations optiques CLn propres à diverses lentilles 15' peuvent être déterminées par l'opérateur 16, en appliquant les opérations susvisées selon les caractéristiques propres à diverses charges 5n et/ou à divers matériels d'élingage 4n, voire encore à divers jeux 1 1 n d'antennes 9n, 9'n potentiellement embarqués à bord du giravion 1.

Dans ce cas, il est bien évidement compris que l'opérateur 16, appliquant la méthode de l'invention, identifie respectivement pour chacune de diverses configurations de transport par élingage de diverses charges 5n :
-) divers dits champ de mobilité C1n,
-) divers dits champs d'interférence C2n prenant éventuellement en compte divers champs de vision optimal C3n du radioaltimètre 2 potentiellement fourni respectivement par divers jeux 11n d'antennes 9n,9'n,
-) divers dits champs de vision limité C4n du radioaltimètre 2 et par suite diverses configurations optiques CLn de diverses lentilles 15n propres à focaliser selon les besoins le champ de vision optimal C3n du radioaltimètre 2. Les diverses lentilles 15, 15n sont interchangeables selon la configuration de transport par élingage d'une charge 5 donnée par le giravion 1 pour focaliser le champ de vision optimal C3 du radioaltimètre selon les besoins.

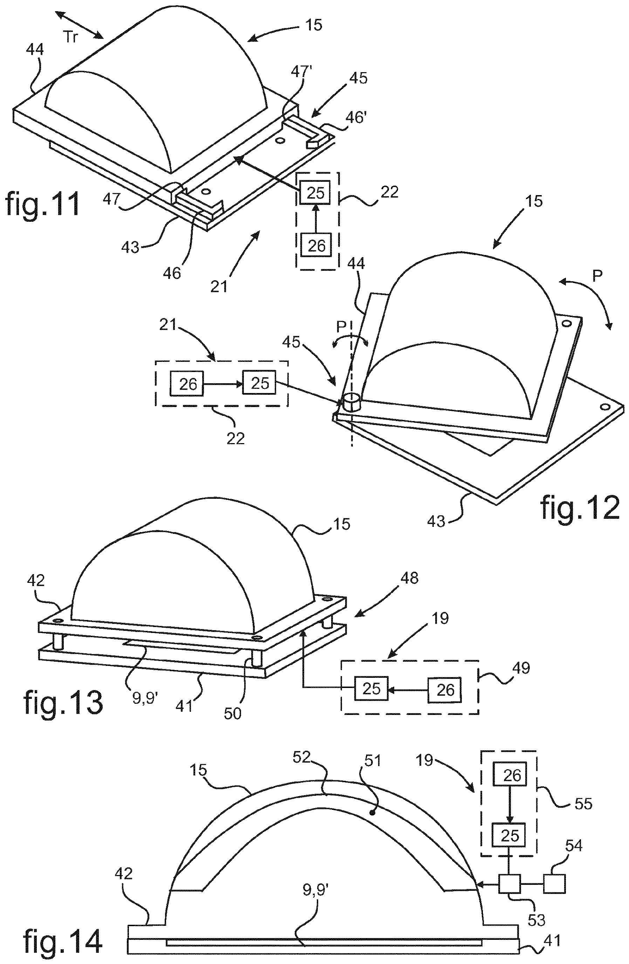

Il est à noter que la lentille 15 est potentiellement équipée de moyens de réglage de sa configuration optique CL tel que visé plus loin en relation avec les fig.13 et fig.14. Dans ce cas, il est bien évidemment compris que diverses configurations optiques CLn d'une même lentille 15 peuvent être identifiées pour procurer au moyen d'une même lentille 15 diverses focalisations du champ de vision optimal C3n du radioaltimètre 2 selon les besoins.

Sur la fig.5, la lentille 15 est installée sur le giravion représenté sur les figures précédentes. Les antennes 9,9' du radioaltimètre 2 transmettent classiquement au calculateur 14 des données 18 à partir desquelles le calculateur 14 détermine la hauteur-sol Hs du giravion affichée par l'écran 3.

Le radioaltimètre 2 est équipé d'un moyen 19, qualifié de réglage de la lentille 15, apte à modifier les effets de la réduction dudit champ de vision optimal C3 du radioaltimètre 2, selon de dites diverses configurations optiques CL,CLn de la lentille 15 préalablement déterminées selon les besoins, et plus particulièrement préalablement déterminées respectivement selon divers champs de mobilité C1, Cn propres à diverses charges 5 données.

Le calculateur 14 intègre des informations relatives aux dites diverses configurations optiques CLn de la lentille 15, soit par exemple par suite de leur intégration préalable dans des moyens de mémoire 20 du calculateur 14, soit par suite de leur détermination effectuée au moyen du calculateur 14 par l'opérateur 16. Selon les besoins, une configuration optique CL de la lentille 15 est identifiée par l'opérateur 16.

Par suite de l'identification par l'opérateur 16 de la configuration optique CL de la lentille 15 à appliquer, le moyen de réglage 19 de la lentille 15 est mis en oeuvre pour réduire selon les besoins le champ de vision optimal du radioaltimètre 2.

Par ailleurs, le radioaltimètre 2 est aussi équipé d'un moyen 21, qualifié d'escamotage de la lentille 15, apte à déplacer la lentille 15 par rapport aux antennes 9,9' pour interrompre ou inversement provoquer l'effet de réduction par la lentille 15 dudit champ de vision optimal C3 du radioaltimètre 2.

La lentille 15 est à cet effet montée mobile sur l'appareillage radioélectrique 7 et est déplaçable par des moyens de manoeuvre 22 entre une position active et une position escamotée. En position active, la lentille réduit le champ de vision optimal du radioaltimètre 2. En position escamotée, la lentille 15 est sans effet sur le champ de vision optimal du radioaltimètre 2.

Les moyens de manoeuvre 22 de la lentille 15 sont potentiellement des moyens de manoeuvre manuelle 23 de la lentille 15 par l'opérateur 16 et/ou des moyens de manoeuvre automatisée 24 de la lentille 15 comprenant un actionneur 25 dont la mise en oeuvre est placée sous la dépendance de moyens de commande 26. De tels moyens de commande 26 sont potentiellement des moyens de commande manuelle 27 activables par l'opérateur 16 et/ou des moyens de commande automatisée 28 activables par réception d'une consigne qualifiée d'activation 29.

Ladite consigne d'activation 29 est par exemple générée par le matériel d'élingage 4 équipé de moyens de détection 30 d'un largage de la charge 5 transportée. En effet lorsque le giravion dépose la charge transportée, il est opportun de rétablir l'usage du champ de vision optimal C3 du radioaltimètre 2 par escamotage de la lentille 15.

Inversement, ladite consigne d'activation 29 est potentiellement générée par le calculateur 14 pour déplacer la lentille en position active par suite d'une détection par le calculateur 14 d'une hauteur-sol Hs identifiant le transport d'une charge 5 par élingage à partir des données 18 fournies par l'appareillage radioélectrique 7.

D'autres solutions peuvent être appliquées pour détecter le transport d'une charge par le matériel d'élingage 4 et par suite pour générer la consigne d'activation 29 visant à déplacer la lentille 15 entre sa position active et sa position escamotée. Par exemple, un matériel de détection de type optoélectronique peut être utilisé pour détecter le transport d'une charge 5 par élingage voire aussi pour identifier la charge 5 transportée et par suite son éventuelle interférence avec les signaux échangés entre les antennes 9,9' du radioaltimètre 2.

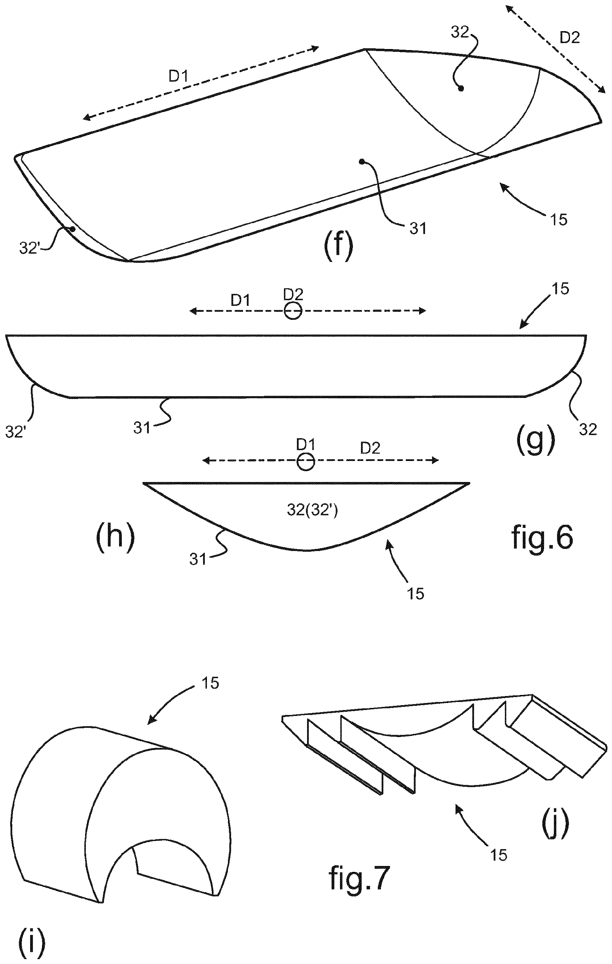

La fig.6 illustre une forme de réalisation d'une lentille 15 équipant un radioaltimètre de la présente invention. Selon cette forme de réalisation, la surface de focalisation 31 de la lentille 15 est d'une conformation simple dans laquelle :
-) la surface de focalisation 31 de la lentille 15 est convexe suivant une première de ses dimensions D1, tel que particulièrement visible sur le schéma (h). Lorsque la lentille 15 est implantée à bord du giravion, la lentille 15 est disposée en orientant sa dite première dimension D1 parallèlement à l'orientation d'extension longitudinale L du giravion.
-) la surface de focalisation 31 de la lentille 15 est essentiellement plane suivant une deuxième de ses dimensions D2 orientée perpendiculairement à la première dimension D1 de la lentille 15, tel que particulièrement visible sur le schéma (g). Les extrémités de la surface de focalisation 31 de la lentille 15 considérée suivant sa deuxième dimension sont agencées en bords arrondis 32, 32'. Lorsque la lentille 15 est implantée à bord du giravion, la lentille 15 est disposée en orientant sa dite deuxième dimension D2 perpendiculairement à l'orientation d'extension longitudinale L du giravion.

D'autres possibles conformations plus complexes d'une lentille 15 équipant un radioaltimètre de la présente invention sont respectivement représentées sur les schémas (i) et (j) de la fig.7.

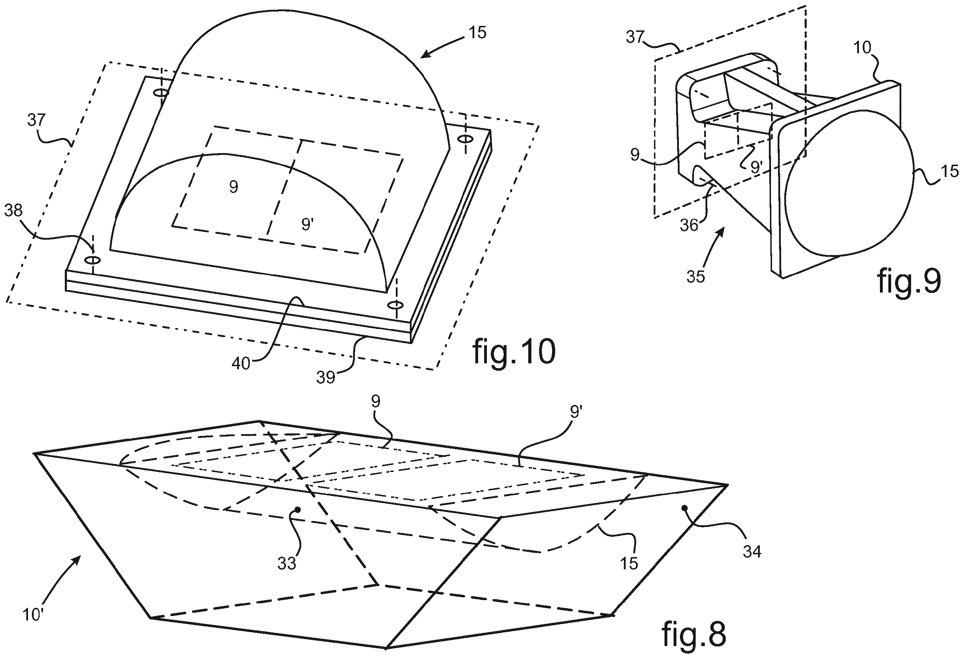

Sur la fig.8, une lentille 15 équipant un radioaltimètre conforme à la présente invention est avantageusement intégrée à un radôme 10', qualifié alors de focalisation, participant d'un appareillage radioélectrique du radioaltimètre. Le radôme de focalisation 10' est par exemple avantageusement formé d'au moins deux couches.

Une couche intérieure 33 du radôme de focalisation 10' est par exemple issue d'une résine époxyde formant la lentille 15. La lentille 15 est noyée dans une couche extérieure 34 en matériau cellulaire imperméable, telle qu'issue d'une mousse synthétique. La couche extérieure 34 ménage un obstacle au passage de l'humidité au travers du radôme de focalisation 10' pour protéger la lentille et les antennes du radioaltimètre. Lesdites antennes 9,9' sont potentiellement intégrées ou non au radôme de focalisation 10'.

Sur la fig.9, un appareillage radioélectrique 7 équipant un radioaltimètre conforme à la présente invention comprend un ensemble structurel 35 regroupant un radôme 10, une lentille 15 et des antennes 9,9'. Le dit ensemble structurel 35 est muni de moyens d'assemblage 36 facilement réversible à un châssis 37 extérieur au radioaltimètre, pour sa fixation à une paroi extérieure du giravion.

Sur la fig.10, un appareillage radioélectrique 7 équipant un radioaltimètre conforme à la présente invention comprend au moins des antennes 9,9' et une lentille 15 de focalisation du champ de vision optimal du radioaltimètre procuré par les antennes 9,9' de configuration plane. Bien évidemment, l'appareillage radioélectrique 7 comporte en outre un radôme non représenté pour faciliter la lecture de la figure.

Des lentilles 15, 15a ou 15b' sont classiquement implantées sur un châssis 37 extérieur au radioaltimètre, notamment formé par la paroi extérieure d'un giravion, par des moyens de fixation 38 facilement réversible mettant typiquement en oeuvre des organes de vissage ou d'emboîtement élastique par exemple. Les antennes 9,9' sont préalablement installées sur un support 39 par la suite exploité pour implanter les antennes 9,9' sur la paroi extérieure du giravion par l'intermédiaire des moyens de fixation 38.

La lentille 15 est montée sur une platine 40 fixée au support 39 en exploitant les moyens de fixation 38 des antennes 9,9' au châssis 37. De telles dispositions permettent de préserver la paroi extérieure du giravion, en évitant d'avoir à la dégrader par l'utilisation de moyens de fixation supplémentaires propres à la lentille 15.

Il ressort des dispositions illustrées sur les fig.9 et fig.10 que la lentille 15 équipant le radioaltimètre est facilement amovible et par suite peut être aisément remplacée selon les besoins par une autre lentille choisie parmi un jeu de lentilles de configurations optiques respectives.

Sur les fig.11 et fig.12, un radioaltimètre conforme à la présente invention est potentiellement équipé d'un moyen d'escamotage 21 procurant une mobilité de la lentille 15 entre ladite position active et ladite position escamotée, tel que précédemment mentionné en relation avec la description de la fig.5.

Plus particulièrement, la lentille 15 est montée mobile sur un support 43 de l'appareillage radioélectrique équipant le radioaltimètre. Un tel support 43 est avantageusement exploité pour la réception des antennes du radioaltimètre en vue de leur montage à bord du giravion, tel que par exemple pour le support 39 illustré sur la fig.10. La lentille 15 est installée sur une platine 44 pour son assemblage au support 43.

La platine 44 est montée mobile sur le support 43 entre la position active et la position escamotée de la lentille 15 par l'intermédiaire de moyens de manoeuvre 22, tel que précédemment mentionnés en relation avec la fig.5. Les moyens de manoeuvre 22 provoquent un déplacement de la lentille 15 par l'intermédiaire de moyens de guidage 45 interposés entre le support 43 et la platine 44.

Sur l'exemple de réalisation illustré sur les fig.11 et fig.12, les moyens de manoeuvre 22 sont des moyens de manoeuvre automatisée comprenant tel que précédemment mentionné au moins un actionneur 25 dont la mise en oeuvre est placée sous la dépendance de moyens de commande 26.

Par exemple sur la fig.11, la lentille 15 est montée mobile en translation Tr sur le support 43 par l'intermédiaire de moyens de guidage 45 agencés en rails 46,46' coopérant avec des glissières 47, 47'. Sur l'exemple de réalisation illustré, les rails 46,46' sont ménagés sur le support 43 et les glissières 47,47' sont ménagées sur la platine 44. Il est bien évidemment compris que lesdits rails 46,46' et lesdites glissières 47,47' peuvent être indifféremment ménagés respectivement sur le support 43 ou sur la platine 44.

Par exemple encore sur la fig.12, la lentille 15 est montée mobile en pivotement P sur le support 43 par l'intermédiaire de moyens de guidage 45 agencés en tourillon ménageant un montage pivotant entre le support 43 et la platine 44.

Sur les fig.13 et fig.14 tel que précédemment mentionné en relation avec la fig.5, une lentille 15 d'un radioaltimètre conforme à la présente invention est potentiellement équipée d'un moyen de réglage 19 de la lentille et plus spécifiquement un moyen de réglage 19 des effets qu'elle produit sur la réduction du champ de vision optimal du radioaltimètre.

Plus particulièrement, la lentille 15 est montée sur un support 41 de l'appareillage radioélectrique équipant le radioaltimètre. Un tel support 41 est avantageusement exploité pour la réception des antennes 9,9' du radioaltimètre en vue de leur montage à bord du giravion, tel que par exemple pour le support 39 illustré sur la fig.10. La lentille 15 est installée sur une platine 42 pour son assemblage au support 41.

Sur les exemples de réalisation respectivement illustrés sur les fig.13 et fig.14, les moyens de réglage 19 de la lentille 15 mettent en oeuvre au moins un dit actionneur 25 dont la mise en oeuvre est placée sous la dépendance de dits moyens de commande 26, tel que précédemment mentionné en relation avec la description de la fig.5.

Il est compris que ledit au moins un actionneur 25 et lesdits moyens de commande 26 sont potentiellement exploités sélectivement pour provoquer l'escamotage de la lentille tel qu'illustré sur les fig.11 et fig.12 et/ou pour provoquer le réglage de la lentille 15 modifiant les effets qu'elle produit sur la réduction du champ de vision optimal du radioaltimètre.

Sur la fig.13, le moyen de réglage 19 de la lentille 15 est un moyen de déplacement relatif entre les antennes 9,9' et la lentille 15. Selon l'exemple de réalisation illustré, la lentille 15 est montée mobile sur l'appareillage radioélectrique par déplacement dans son plan général de la platine 42 sur le support 41, parallèlement au plan général du support 41 et plus particulièrement parallèlement au plan général des antennes 9,9' montées sur le support 41.

A cet effet, la platine 42 est équipée de moyens de guidage 48 sur le support 41, tels que comprenant un jeu de colonnes de guidage 50 interposées entre le support 41 et la platine 42. La lentille 15 est déplaçable dans son plan général par éloignement ou inversement par rapprochement par rapport aux antennes 9,9' par des moyens de manoeuvre 49, tels que les moyens de manoeuvre 22 précédemment mentionnés en relation avec la fig.5 et les fig.11 et fig.12 et en outre potentiellement exploités pour l'escamotage de la lentille 15.

Dans ce contexte, il est compris que les moyens de manoeuvre 49 sont de préférence confondus avec les moyens de manoeuvre 22.

Sur la fig.14, le moyen de réglage 19 de la lentille 15 est un moyen de modification de la configuration optique de la lentille 15. Plus particulièrement selon l'exemple de réalisation illustré, le moyen de réglage 19 est un moyen de régulation 55 d'une circulation de fluide 51 à l'intérieur d'une poche 52 intégrée à la lentille 15. L'actionneur 25 mis en oeuvre sous dépendance des moyens de commande 26 est dans ce cas un organe de manoeuvre d'une vanne 53 en relation avec une source 54 dudit fluide 51.

Sur les schémas (k) et (I) de la fig.15, la lentille 15 est potentiellement munie d'une couche spécifique, dite couche filtrante 56. L'antenne émettrice 9 étant génératrice d'ondes incidentes 57 vers la lentille 15, la lentille 15 est susceptible de renvoyer vers l'antenne émettrice 9 des ondes, dites ondes réfléchies 58. De telles ondes réfléchies 58 sont perturbatrices de la pertinence des signaux électromagnétiques 57' générés par l'antenne émettrice 9.

Dans ce contexte, la couche filtrante 56 produit un déphasage entre les ondes réfléchies 58 pour éviter d'être source de perturbation des signaux électromagnétiques générés par l'antenne émettrice 9.

Sur l'exemple de réalisation illustré sur le schéma (k), la couche filtrante 56 est formée d'un revêtement 59 couvrant la lentille 15 au moins le long de sa surface orientée vers l'antenne émettrice 9 en modifiant le champ de vision de base du radioaltimètre. Un tel revêtement 59 est notamment issu d'un matériau spécifique apte à produire ledit déphasage entre les ondes incidentes 57.

Sur l'exemple de réalisation illustré sur le schéma (I), la couche filtrante 56 est formée d'un relief 60 intégré à la lentille 15, notamment à sa surface orientée vers l'antenne émettrice 9 en modifiant le champ de vision de base du radioaltimètre. Sur l'exemple de réalisation illustré, un tel relief 60 apte à produire un déphasage entre les ondes réfléchies 58 est conformé en une succession de saillies et de creux respectivement formés de rainures ménageant des gorges entre elles.

Bien que l'organe décrit et représenté modifiant la portée du champ de vision du radioaltimètre est constitué d'une lentille, le terme de lentille n'est pas à être considéré au sens stricte du terme. En effet, une telle lentille peut par analogie être remplacée par tout autre organe connu produisant les mêmes effets sur le champ de vision du radioaltimètre, tels que par exemple des plaques métalliques disposées parallèlement entre elles formant une lentille artificielle avec un indice inférieur à 1, ou par exemple encore des motifs métalliques imprimés sur au moins un substrat avec un indice négatif communément dénommé métamatériau.

## Revendications

1. Méthode de mesure de la hauteur-sol (Hs) d'un giravion (1) au moyen d'un radioaltimètre (2) mettant en oeuvre un calculateur (14) déterminant ladite hauteur-sol (Hs) du giravion (1) à partir de données (18) fournies par un appareillage radioélectrique (7) comprenant au moins un jeu de deux antennes (9,9'), les antennes (9,9') étant implantées sous le giravion (1) considéré en station au sol, les antennes (9,9') prédéfinissant entre elles un champ de vision qualifié « de base » (C) du radioaltimètre (2) et fournissant lesdites données (18) au calculateur (14) par échange entre elles de signaux électromagnétiques,
**caractérisée en ce que**, les antennes (9,9') étant protégées par au moins un radôme (10) et étant de configuration plane, le giravion (1) étant par ailleurs doté d'un matériel d'élingage (4) pour le transport de charge (5), la méthode comprend une opération de modification dudit champ de vision de base (C) du radioaltimètre (2) par au moins une lentille (15) en fonction de l'interférence ou non dans le champ de vision de base (C) du radioaltimètre (2) d'une charge (5) donnée devant être transportée ballante sous le giravion (1) par ledit matériel d'élingage (4), une exploitation sélective de ladite au moins une lentille (15) selon le champ de mobilité (C1) de la charge (5) modifiant le champ de vision de base (C) du radioaltimètre (2) selon les modalités suivantes :
-) hors cas (M2a, M2b) de transport de la charge (5) par le matériel d'élingage (4), production d'un champ de vision du radioaltimètre (2) de portée optimale prédéfinie, dit champ de vision optimal (C3),
-) en cas (M1a, M1b) de transport de la charge (5) par le matériel d'élingage (4), production d'un champ de vision du radioaltimètre (2), dit champ de vision limité (C4) d'une portée inférieure à la portée du champ de vision optimal (C3), le champ de vision limité (C4) étant identifié par exclusion, hors du champ de vision optimal (C3), d'un champ de mobilité (C1) préalablement déterminé de ladite charge (5) transportée par le matériel d'élingage (4) considéré suivant au moins l'axe longitudinal (L) d'extension du giravion (1).

2. Méthode selon la revendication 1,
**caractérisée en ce que**, la lentille (15) étant formée par une lentille convergente (15a),
-) une opération de focalisation par la lentille convergente (15) du champ de vision de base (C) du radioaltimètre (2) selon le champ de mobilité (C1) de la charge (5) préalablement identifié, procure au radioaltimètre (2) le champ de vision limité (C4), et
-) une opération de neutralisation des effets produits par la lentille convergente (15a) sur le champ de vision de base (C) du radioaltimètre (2), l'opération de neutralisation procure au radioaltimètre (2) le champ de vision optimal (C3).

3. Méthode selon la revendication 1,
**caractérisée en ce que**, la lentille (15) étant formée par une lentille divergente (15b),
-) une opération d'élargissement par la lentille divergente (15b) du champ de vision de base (C) du radioaltimètre (2) procure au radioaltimètre (2) le champ de vision optimal (C3), et
-) une opération de neutralisation par la lentille divergente (15b) du champ de vision de base (C) du radioaltimètre (2) selon le champ de mobilité (C1) de la charge (5) préalablement identifié procure au radioaltimètre (2) le champ de vision limité (C4).

4. Méthode selon l'une quelconque des revendications 1 à 3,
**caractérisée en ce que** la méthode comprend les opérations suivantes :
-) identifier un champ de mobilité (C1) d'au moins une dite charge (5) donnée , puis par suite déterminer un champ qualifié d'interférence (C2) et identifié par intersection entre le champ de vision optimal (C3) et le champ de mobilité (C1) de ladite charge (5) donnée, puis déduire le champ de vision limité (C4) excluant, hors du champ de vision optimal (C3), le champ d'interférence (C2) considéré suivant au moins l'axe longitudinal (L) d'extension du giravion (1),
-) identifier une configuration optique (CL) d'au moins une lentille (15) apte à modifier le champ de vision de base (C) du radioaltimètre (2) :
*) soit par réduction au moyen d'une lentille convergente (15a) du champ de vision de base (C3) du radioaltimètre (2) audit champ de vision limité (C4) dans le cas où le champ de vision de base (C) du radioaltimètre (2) est équivalent au champ de vision optimal (C3),
*) soit par augmentation au moyen d'une lentille divergente (15b) du champ de vision de base (C) du radioaltimètre (2) audit champ de vision optimal (C3) prédéfini dans le cas où le champ de vision de base (C) du radioaltimètre (2) est équivalent au champ de vision limité (C4) du radioaltimètre (2), puis
-) sélectivement exploiter ou non ladite au moins une lentille (15) dont la configuration optique (CL) est préalablement identifiée, selon le champ de vision à procurer au radioaltimètre (2) entre le champ de vision optimal (C3) et le champ de vision limité (C4) respectivement en l'absence et en présence d'un transport de la charge (5) donnée par le matériel d'élingage (4).

5. Méthode selon la revendication 4,
**caractérisée en ce que** ledit champ de vision limité (C4) est déduit en excluant, hors du champ de vision optimal (C3), ledit champ d'interférence (C2) considéré suivant à la fois l'axe longitudinal (L) d'extension du giravion (1) et l'axe transversal (T) d'extension du giravion (1).

6. Méthode selon l'une quelconque des revendications 1 à 5, **caractérisée :**
**en ce que** divers champs de mobilité (C1 n) respectivement pour chacune de diverses charges (5n) données sont identifiés et par suite divers dits champs de vision limité (C4n) sont respectivement déduits pour chacun desdits divers champs de mobilité (C1 n) préalablement identifiés,
**en ce que** diverses configurations optiques (CLn) de ladite au moins une lentille (15) sont identifiées respectivement selon lesdits divers champs de vision limité (C4n), et
**en ce qu'**au moins une lentille (15) de configuration optique (CL) préalablement identifiée pour une charge (5) considérée, est exploitée pour conférer au radioaltimètre (2) le champ de vision limité (C4) déduit du champ de mobilité (C1) de la charge (5) considérée transportée par le matériel d'élingage (4).

7. Méthode selon la revendication 6,
**caractérisée en ce que** ladite au moins une lentille (15) est sélectionnée parmi un jeu de lentilles (15) interchangeables de configurations optiques (CLn) respectives préalablement identifiées selon les diverses charges (5n) données.

8. Méthode selon la revendication 6,
**caractérisée en ce que** la configuration optique (CL) de ladite au moins une lentille (15) est modifiable selon le champ de vision limité (C4) du radioaltimètre (2) déduit en fonction d'une charge (5) considérée transportée par le matériel d'élingage (4).

9. Méthode selon l'une quelconque des revendications 1 à 8,
**caractérisée en ce que** ladite au moins une lentille (15) est sélectivement manoeuvrable entre une position active dans laquelle la lentille (15) modifie le champ de vision de base (C) du radioaltimètre (2) et une position escamotée dans laquelle la lentille (15) est dégagée des antennes (9,9') et par suite est sans effet sur le champ de vision de base (C) du radioaltimètre (2).

10. Méthode selon l'une quelconque des revendications 1 à 9, **caractérisée :**
**en ce que** ladite au moins une dite lentille (15) est sélectionnée parmi un jeu de lentilles (15n) interchangeables de configurations optiques respectives,
**en ce que** la configuration optique de ladite au moins une lentille (15) est modifiable selon le champ de vision limité (C4) du radioaltimètre (2) préalablement déduit conformément aux modalités appliquées de transport ou non par élingage d'une dite charge (5) donnée,
**en ce que** ladite au moins une dite lentille (15) est sélectivement manoeuvrable entre une position active dans laquelle la lentille (15) modifie le champ de vision de base (C) du radioaltimètre (2) et une position escamotée dans laquelle la lentille (15) est dégagée des antennes (9,9') et par suite est sans effet sur le champ de vision de base (C) du radioaltimètre (2).

11. Radioaltimètre (2) pour giravion (1) configuré pour la mise en oeuvre d'une méthode selon l'une quelconque des revendications 1 à 10, le radioaltimètre (2) comprenant un calculateur (14) de détermination de la hauteur-sol (Hs) d'un giravion (1) à partir de données (18) fournies par un appareillage radioélectrique (7) comprenant au moins un jeu de deux antennes (9,9'), les antennes (9,9') prédéfinissant entre elles un champ de vision qualifié de base (C) du radioaltimètre (2) et fournissant au calculateur (14) lesdites données (18) par échange de signaux électromagnétiques, **caractérisé en ce que** les antennes (9,9') sont de configuration plane, le radioaltimètre comprends un radôme (10) de protection des antennes (9,9'), l'appareillage radioélectrique (7) comprend en outre au moins une lentille (15) de modification du champ de vision de base (C) du radioaltimètre (2) défini par lesdites antennes (9,9') de configuration plane.

12. Radioaltimètre (2) selon la revendication 11,
**caractérisé en ce que** ladite lentille (15) est une lentille convergente (15a) de focalisation du champ de vision de base (C) du radioaltimètre (2).

13. Radioaltimètre (2) selon la revendication 11,
**caractérisé en ce que** ladite lentille (15) est une lentille divergente (15b) d'augmentation du champ de vision de base (C) du radioaltimètre (2).

14. Radioaltimètre (2) selon l'une quelconque des revendications 11 à 13,
**caractérisé en ce que** la lentille (15) est intégrée au radôme (10), dit alors radôme optique (10').

15. Radioaltimètre (2) selon la revendication 14,
**caractérisé en ce que** le radôme optique (10') est formé d'au moins deux couches comprenant une couche extérieure (34) en matériau cellulaire imperméable enveloppant une couche intérieure (33) formant la lentille (15).

16. Radioaltimètre (2) selon l'une quelconque des revendications 11 à 15,
**caractérisé en ce que** les antennes (9,9'), ladite au moins une lentille (15) et le radôme (10) sont rassemblés dans un même ensemble structurel (35) muni de moyens d'assemblage réversible à un châssis (37) extérieur au radioaltimètre (2).

17. Radioaltimètre (2) selon l'une quelconque des revendications 11 à 16,
**caractérisé en ce que** la lentille (15) est munie d'une couche spécifique, dite couche filtrante (56), générant un déphasage entre des ondes, dites ondes réfléchies (58), renvoyées vers l'antenne émettrice (9) par suite de la réception par la lentille (15) d'ondes électromagnétiques, dites ondes incidentes (57), issues des signaux radioélectriques émis par l'antenne émettrice (9).

18. Radioaltimètre (2) selon la revendication 17,
**caractérisé en ce que** ladite couche filtrante (56) est ménagée à la surface extérieure de la lentille (15) au moins dans sa partie orientée vers l'antenne émettrice (9).

19. Radioaltimètre (2) selon l'une quelconque des revendications 17 et 18,
**caractérisé en ce que** ladite couche filtrante (56) est au moins formée d'un revêtement (59) de couverture de la lentille (15).

20. Radioaltimètre (2) selon l'une quelconque des revendications 17 à 19,
**caractérisé en ce que** ladite couche filtrante (56) est au moins formée d'un relief (60) spécifique intégré à la lentille (15).

21. Radioaltimètre (2) selon l'une quelconque des revendications 11 à 20,
**caractérisé en ce que** le radioaltimètre (2) est équipé d'un moyen, qualifié de réglage (19) de la lentille (15), apte à modifier les effets de la lentille (15) sur le champ de vision de base (C) du radioaltimètre (2).

22. Radioaltimètre (2) selon la revendication 21,
**caractérisé en ce que** le moyen de réglage (19) de la lentille (15) est un moyen de modification de la configuration optique (CL) de la lentille (15).

23. Radioaltimètre (2) selon la revendication 22,
**caractérisé en ce que** le moyen de modification de la configuration optique (CL) de la lentille (15) est un moyen de régulation (55) d'une circulation de fluide (51) à l'intérieur de la lentille (15) modifiant ses caractéristiques optiques propres.

24. Radioaltimètre (2) selon la revendication 23,
**caractérisé en ce que** la lentille (15) est formée de plusieurs strates ménageant entre elles au moins une poche (52) à circulation de fluide, une circulation de fluide à l'intérieur de ladite au moins une poche (52) modifiant la configuration optique de la lentille (15).

25. Radioaltimètre (2) selon la revendication 21,
**caractérisé en ce que** le moyen de réglage (19) de la lentille (15) est un moyen de déplacement relatif entre les antennes (9,9') et la lentille (15) montée mobile sur l'appareillage radioélectrique (7).

26. Radioaltimètre (2) selon l'une quelconque des revendications 11 à 25,
**caractérisé en ce que** le radioaltimètre (2) est équipé d'un moyen, qualifié d'escamotage (21) de la lentille (15), apte à déplacer la lentille (15) par rapport aux antennes (9,9'), la lentille (15) étant montée mobile sur l'appareillage radioélectrique (7) entre une position active dans laquelle la lentille (15) modifie le champ de vision de base (C) du radioaltimètre (2) et une position escamotée dans laquelle la lentille (15) est placée hors du champ de vision de base (C) du radioaltimètre (2) et par suite est sans effet sur le champ de vision de base (C) du radioaltimètre (2).

27. Radioaltimètre (2) selon l'une quelconque des revendications 21 et 26,
**caractérisé en ce que** la lentille (15) est montée mobile sur un support (12,39,41,43) de l'appareillage radioélectrique (7) et est déplaçable par des moyens de manoeuvre (22,49) participant de l'un quelconque au moins du moyen de réglage (19) de la lentille (15) et du moyen d'escamotage (21) de la lentille (15).

28. Radioaltimètre (2) selon la revendication 27,
**caractérisé en ce que** les moyens de manoeuvre (22,49) de la lentille (15) sont des moyens de manoeuvre manuelle (23) de la lentille (15) par un opérateur (16).

29. Radioaltimètre (2) selon l'une quelconque des revendications 27 et 28,
**caractérisé en ce que** les moyens de manoeuvre (22,49) de la lentille (15) sont des moyens de manoeuvre automatisée (24) de la lentille (15) comprenant au moins un actionneur (25) dont la mise en oeuvre est placée sous la dépendance de moyens de commande (26).

30. Radioaltimètre (2) selon la revendication 29,
**caractérisé en ce que** lesdits moyens de commande (26) comprennent indifféremment des moyens de commande manuelle (27) activables par un opérateur (16) et/ou des moyens de commande automatisée (28) activables par réception d'une consigne qualifiée d'activation (29) des moyens de commande (26) et générée par un organe de calcul équipant le radioaltimètre et identifiant les effets à produire par la lentille (15) sur le champ de vision de base (C) du radioaltimètre (2).

31. Radioaltimètre (2) selon l'une quelconque des revendications 11 à 30,
**caractérisé en ce que**, le calculateur (14) comprenant un algorithme principal calculant la hauteur-sol (Hs) du giravion (1) à partir desdites données (18) fournies par l'appareillage radioélectrique (7), le calculateur (14) comporte en outre un algorithme annexe prenant en compte les effets spécifiquement produits par la lentille (15) sur le champ de vision de base (C) du radioaltimètre (2).

32. Giravion (1) équipé d'un radioaltimètre (2) selon l'une quelconque des revendications 11 à 31 pour la mise en oeuvre d'une méthode selon l'une quelconque des revendications 1 à 10, le giravion (1) étant équipé dudit radioaltimètre (2) comprenant ledit calculateur (14) identifiant la hauteur-sol (Hs) du giravion (1) à partir desdites données (18) fournies par un dit appareillage radioélectrique (7) comprenant au moins un dit jeu (11,11') de deux antennes (9,9') coopérant par échange de signaux électromagnétiques, les antennes (9,9') étant de configuration plane et étant implantées sous le giravion (1) considéré en station au sol en étant protégées par au moins un dit radôme (10), les antennes (9,9') définissant entre elles un dit champ prédéfini de vision qualifié de base (C) du radioaltimètre (2), le giravion (1) étant équipé d'un dit matériel d'élingage (4) pour le transport sous le giravion (1) d'une dite charge (5) ballante dans un dit champ de mobilité (C1) donné préalablement identifié,
**caractérisé en ce que** l'appareillage radioélectrique (7) comprend au moins une dite lentille (15) de modification du champ de vision de base (C) du radioaltimètre (2) suivant au moins l'axe longitudinal (L) d'extension du giravion (1), la lentille (15) modifiant le champ de vision de base (C) du radioaltimètre (2) conformément :
-) hors cas (M2a, M2b) de transport de ladite charge (5) par le matériel d'élingage (4), à une optimisation du champ de vision du radioaltimètre (2) lui conférant alors un champ de vision prédéfini, dit champ de vision optimal (C3), et
-) en cas (M1a, M1b) de transport de ladite charge (5) par le matériel d'élingage (4), à une réduction dudit champ de vision optimal (C3) conférant alors au radioaltimètre (2) un champ de vision, dit champ de vision limité (C4), en fonction du champ de mobilité (C1) de ladite charge (5) transportée ballante sous le giravion (1).

33. Giravion (1) selon la revendication 32,
**caractérisé en ce que**, la lentille (15) étant une lentille convergente (15a) de focalisation du champ de vision de base (C) du radioaltimètre (2), la surface (31) de la lentille (15) modifiant le champ de vision de base (C) du radioaltimètre (2) est convexe suivant l'axe longitudinal (L) et l'axe transversal (T) d'extension du giravion (1).

34. Giravion (1) selon la revendication 32,
**caractérisé en ce que**, la lentille (15) étant une lentille convergente (15a) de focalisation du champ de vision de base (C) du radioaltimètre (2), la surface (31) de la lentille (15) modifiant le champ de vision de base (C) du radioaltimètre (2) est convexe suivant l'axe longitudinal (L) d'extension du giravion (1) et est essentiellement plane suivant l'axe transversal (T) d'extension du giravion (1).

35. Giravion (1) selon la revendication 34,
**caractérisé en ce que** la lentille (15) est pourvue de bords arrondis (32) ménagés aux extrémités de la surface (31) de la lentille (15) modifiant le champ de vision de base (C) du radioaltimètre (2), lesdites extrémités étant considérées suivant l'axe transversal (T) d'extension du giravion (1).

36. Giravion (1) selon l'une quelconque des revendications 32 à 35,
**caractérisé en ce que** la lentille (15) est montée amovible sur l'appareillage radioélectrique (7) et est interchangeable parmi un jeu de lentilles (15n) de configurations optiques respectives.

37. Giravion (1) selon la revendication 36,
**caractérisé en ce que** la lentille (15) est montée amovible sur l'appareillage radioélectrique (7) au moins partiellement par l'intermédiaire de moyens de fixation (13) des antennes (9,9') sur une paroi extérieure du giravion (1).

38. Giravion (1) selon l'une quelconque des revendications 32 à 37,
**caractérisé en ce que** le radioaltimètre (2) étant équipé de dits moyens de commande automatisée (28), le matériel d'élingage (4) est équipé de moyens de détection (30) d'une charge (5) portée par le matériel d'élingage (4), lesdits moyens de détection (30) participant dudit organe de calcul en étant générateurs de ladite consigne d'activation (29) des moyens de commande (26) par suite d'un largage de la charge (5) transportée provoquant la mise en oeuvre du dit moyen d'escamotage (21) de la lentille (15) déplaçant la lentille (15) entre ladite position active et ladite position escamotée.

39. Giravion (1) selon la revendication 38,
**caractérisé en ce que** le calculateur (14) participe dudit organe de calcul en étant générateur de ladite consigne d'activation (29) des moyens de commande (26) provoquant la mise en oeuvre de dits moyens d'escamotage (21) déplaçant la lentille (15) entre ladite position escamotée et ladite position active par suite d'une détection par le calculateur (14) d'une hauteur-sol (Hs) identifiant le transport d'une charge (5) par élingage à partir des données (18) fournies par l'appareillage radioélectrique (7).

## Patentansprüche

1. Verfahren zur Messung der Höhe über Grund (Hs) eines Drehflügelflugzeugs (1) mit einem Funkhöhenmesser (2), der einen Rechner (14) benutzt, der die Höhe über Grund (Hs) des Drehflügelflugzeugs (1) ausgehend von Daten (18) bestimmt, die von einer Funkanlage (7) geliefert werden, die mindestens einen Satz aus zwei Antennen (9, 9') aufweist, wobei die Antennen (9, 9') unter dem Drehflügelflugzeug (1), das als auf dem Boden parkend angesehen wird, eingebaut sind, wobei die Antennen (9, 9') untereinander ein "Grundsichtfeld" genanntes Sichtfeld (C) des Funkhöhenmessers (2) vorgeben und die Daten (18) über einen gegenseitigen Austausch elektromagnetischer Signale an den Rechner (14) liefern,
dadurch gekenntzeichnet, dass die Antennen (9, 9') durch mindestens ein Radom geschützt und von flachem Aufbau sind, wobei das Drehflügelflugzeug (1) außerdem mit einem Seilgehänge (4) für den Transport einer Last (5) versehen ist, wobei das Verfahren einen Schritt der Veränderung des Grundsichtfelds (C) des Funkhöhenmessers (2) durch mindestens eine Linse (15) in Abhängigkeit von dem Vorliegen oder Nichtvorliegen einer Überschneidung in dem Grundsichtfeld (C) des Funkhöhenmessers (2) mit einer vorgegebenen Last (5), die mit dem Seilgehänge (4) unter dem Drehflügelflugzeug (1) baumelnd zu transportieren ist, aufweist, wobei eine selektive Verwendung der mindestens einen Linse (15), je nach dem Beweglichkeitsbereich (C1) der Last (5), das Grundsichtfeld (C) des Funkhöhenmessers (2) gemäß den folgenden Modalitäten ändert:
-) in dem Fall (M2a, M2b), dass kein Transport einer Last (5) mit dem Seilgehänge (4) stattfindet: Erzeugen eines optimalen, vordefinierten Sichtfelds des Funkhöhenmessers (2), das optimales Sichtfeld (C3) genannt wird,
-) im Fall (M1a, M1b) des Transports einer Last (5) mit dem Seilgehänge (4): Erzeugen eines begrenztes Sichtfeld (C4) genannten Sichtfelds des Funkhöhenmessers (2) mit einem Sichtbereich, der kleiner ist als der Sichtbereich im optimalen Sichtfeld (C3), wobei das begrenzte Sichtfeld (C4) identifiziert wird durch Ausschluss eines zuvor bestimmten Beweglichkeitsbereichs (C1) der mit dem Seilgehänge (4) transportierten Last (5), das wenigstens entlang der Längserstreckungsachse (L) des Drehflügelflugzeugs (1) berücksichtigt wird, aus dem optimalen Sichtfeld (C3).

2. Verfahren nach Anspruch 1,
**dadurch gekennzeichnet, dass** die Linse (15) eine konvergente Linse (15a) ist, wobei
-) eine Fokussierung des Grundsichtfeldes (C) des Funkhöhenmessers (2) durch die konvergente Linse (15) je nach zuvor identifiziertem Beweglichkeitsbereich (C1) der Last (5) das begrenzte Sichtfeld (C4) für den Funkhöhenmesser (2) bereitstellt, und
-) eine Neutralisierung der von der konvergenten Linse (15a) auf dem Grundsichtfeld (C) des Funkhöhenmessers (2) erzeugten Effekte dem Funkhöhenmesser (2) das optimale Sichtfeld (C3) bereitstellt.

3. Verfahren nach Anspruch 1,
**dadurch gekennzeichnet, dass** die Linse (15) eine divergente Linse (15b) ist, wobei
-) eine Vergrößerung des Grundsichtfeldes (C) des Funkhöhenmessers (2) diesem das optimale Sichtfeld (C3) bereitstellt, und
-) eine Neutralisierung des Grundsichtfelds (C) des Funkhöhenmessers (2) durch die divergente Linse (15b) je nach zuvor identifiziertem Beweglichkeitsbereich (C1) der Last (5) dem Funkhöhenmesser (2) das begrenzte Sichtfeld (C4) bereitstellt.

4. Verfahren nach einem der Ansprüche 1 bis 3,
**dadurch gekennzeichnet, dass** das Verfahren die folgenden Schritte aufweist:
-) Identifizieren eines Beweglichkeitsbereichs (C1) der besagten mindestens einen vorgegebenen Last (5), und danach Bestimmen eines Überschneidungsbereich (C2) genannten Bereichs, der identifiziert wird durch die Überschneidung zwischen dem optimalen Sichtfeld (C3) und dem Beweglichkeitsbereich (C1) der besagten vorgegebenen Last (5), und dann Herleiten des begrenzten Sichtfelds (C4) durch Ausschließen des mindestens entlang der Längserstreckungsachse (L) des Drehflügelflugzeugs (1) berücksichtigten Überschneidungsbereichs (C2) aus dem optimalen Sichtfeld (C3),
-) Bestimmen einer optischen Anordnung (CL) bestehend aus mindestens einer Linse (15), die das Grundsichtfeld (C) des Funkhöhenmessers (2) verändern kann:
*) entweder durch Verkleinerung des Grundsichtfelds (C3) des Funkhöhenmessers (2) mit Hilfe einer konvergenten Linse (15a) auf das begrenzte Sichtfeld (C4) in dem Fall, in dem das Grundsichtfeld (C) des Funkhöhenmessers (2) gleich dem optimalen Sichtfeld (C3) ist,
*) oder durch Vergrößerung des Grundsichtfelds (C) des Funkhöhenmessers (2) mit Hilfe einer divergenten Linse (15b) auf das vordefmierte optimale Sichtfeld (C3) in dem Fall, in dem das Grundsichtfeld (C) des Funkhöhenmessers (2) gleich dem begrenzten Sichtfeld (C4) des Funkhöhenmessers (2) ist, und dann
-) selektives Nutzen oder Nicht-Nutzen der mindestens einen Linse (15), deren optische Anordnung (CL) zuvor bestimmt wurde, je nach dem für den Funkhöhenmesser (2) bereitzustellenden Sichtfeld zwischen dem optimalen Sichtfeld (C3) und dem begrenzten Sichtfeld (C4) bei Vorliegen oder Nicht-Vorliegen eines Transports der vorgegebenen Last (5) mit dem Seilgehänge (4).

5. Verfahren nach Anspruch 4,
**dadurch gekennzeichnet, dass** das begrenzte Sichtfeld (C4) hergeleitet wird durch Ausschließen des Überschneidungsbereichs (C2) aus dem optimalen Sichtfeld (C4), der sowohl entlang der Längserstreckungsachse (L) des Drehflügelflugzeugs (1) als auch der Quererstreckungsachse (T) des Drehflügelflugzeugs (1) berücksichtigt wird.

6. Verfahren nach einem der Ansprüche 1 bis 5,
**dadurch gekennzeichnet, dass**:
verschiedene Beweglichkeitsbereiche (C1n) jeweils für jede von vorgegebenen verschiedenen Lasten (5n) bestimmt werden, und dann verschiedene begrenzte Sichtfelder (C4n) jeweils für jeden der verschiedenen zuvor bestimmten Beweglichkeitsbereiche (C1n) hergeleitet werden,
verschiedene optische Anordnungen (CLn) der mindestens einen Linse (15) jeweils gemäß der verschiedenen begrenzten Sichtfelder (C4n) bestimmt werden, und
mindestens eine Linse (15), deren optische Anordnung (CL) zuvor für eine betrachtete Last (5) identifiziert wurde, benutzt wird, um für den Funkhöhenmesser (2) das begrenzte Sichtfeld (C4) bereitzustellen, das hergeleitet ist aus dem Beweglichkeitsbereich (C1) der als mit dem Seilgehänge (4) transportiert betrachteten Last (5).

7. Verfahren nach Anspruch 6,
**dadurch gekennzeichnet, dass** die besagte mindestens eine Linse (15) ausgewählt ist aus einem Satz untereinander austauschbarer Linsen (15) mit jeweiligen optischen Anordnungen (CLn), die jeweils für verschiedene gegebene Lasten (5n) zuvor bestimmt wurden.

8. Verfahren nach Anspruch 6,
**dadurch gekennzeichnet, dass** die optische Anordnung (CL) der mindestens einen Linse (15) je nach begrenztem Sichtfeld (C4) des Funkhöhenmessers (2), das hergeleitet wird in Abhängigkeit von einer von dem Seilgehänge (4) transportierten betrachteten Last (5), veränderbar ist.

9. Verfahren nach einem der Ansprüche 1 bis 8,
**dadurch gekennzeichnet, dass** die mindestens eine Linse (15) selektiv manövrierbar ist zwischen einer aktiven Stellung, in der die Linse (15) das Grundsichtfeld (C) des Funkhöhenmessers (2) verändert, und einer eingefahrenen Stellung, in der die Linse (15) von den Antennen (9, 9') entfernt wird und somit keine Wirkung auf das Grundsichtfeld (C) des Funkhöhenmessers (2) hat.

10. Verfahren nach einem der Ansprüche 1 bis 9,
**dadurch gekennzeichnet, dass**:
die mindestens eine besagte Linse (15) aus einem Satz austauschbarer Linsen (15n) mit jeweiligen optischen Anordnungen ausgewählt ist,
die optische Anordnung der mindestens einen Linse (15) veränderbar ist, je nach dem begrenzten Sichtfeld (C4) des Funkhöhenmessers (2), das zuvor hergeleitet wurde, in Übereinstimmung mit angewendeten Modalitäten bei Vorliegen oder Nicht-Vorliegen eines Transports einer gegebenen besagten Last (5) mit dem Seilgehänge, die mindestens eine Linse (15) selektiv manövrierbar ist zwischen einer aktiven Stellung, in der die Linse (15) das Grundsichtfeld (C) des Funkhöhenmessers (2) verändert, und einer eingezogenen Stellung, in der die Linse (15) von den Antennen (9, 9') entfernt ist und somit keine Wirkung auf das Grundsichtfeld (C) des Funkhöhenmessers (2) ausübt.

11. Funkhöhenmesser (2) für ein Drehflügelflugzeug (1), das für die Durchführung eines Verfahrens nach einem der Ansprüche 1 bis 10 ausgeführt ist, wobei der Funkhöhenmessers (2) einen Rechner (14) zur Bestimmung der Höhe über Grund (Hs) eines Drehflügelflugzeugs (1) ausgehend von Daten (18), die von einer Funkanlage (7) mit mindestens einem Satz aus zwei Antennen (9, 9') geliefert werden, wobei die Antennen (9, 9') untereinander ein Grundsichtfeld genanntes Sichtfeld (C) des Funkhöhenmessers (2) vordefinieren und dem Rechner (14) die Daten (18) durch den Austausch elektromagnetischer Signale liefern,
**dadurch gekennzeichnet, dass** die Antennen (9, 9') einen flachen Aufbau aufweisen, und der Funkhöhenmesser ein Radom (10) zum Schutz der Antennen (9, 9') aufweist, wobei die Funkanlage (7) ferner mindestens eine Linse (15) zur Veränderung des Grundsichtfelds (C) des Funkhöhenmessers (2) aufweist, das durch die Antennen (9, 9') mit flachem Aufbau definiert ist.

12. Funkhöhenmesser (2) nach Anspruch 11,
**dadurch gekennzeichnet, dass** die Linse (15) eine konvergente Linse (15a) zur Fokussierung des Grundsichtfeldes (C) des Funkhöhenmessers (2) ist.

13. Funkhöhenmesser (2) nach Anspruch 11,
**dadurch gekennzeichnet, dass** die Linse (15) eine divergente Linse (15b) zur Vergrößerung des Grundsichtfelds (C) des Funkhöhenmessers (2) ist.

14. Funkhöhenmesser (2) nach einem der Ansprüche 11 bis 13,
**dadurch gekennzeichnet, dass** die Linse (15) in dem Radom (10) integriert ist, der somit optisches Radom (10') genannt wird.

15. Funkhöhenmesser (2) nach Anspruch 14,
**dadurch gekennzeichnet, dass** das optische Radom (10') aus mindestens zwei Schichten geformt ist, die eine äußere Schicht (34) aus undurchlässigem Schaumstoffmaterial, die eine innere Schicht (33), die die Linse (15) bildet, umschließt, aufweisen.

16. Funkhöhenmesser (2) nach einem der Ansprüche 11 bis 15,
**dadurch gekennzeichnet, dass** die Antennen (9, 9'), die mindestens eine Linse (15) und das Radom (10) zu einer strukturellen Einheit (35) gruppiert sind, die mit Mitteln zur reversiblen Montage an einem Gehäuse (37) außerhalb des Funkhöhenmessers (2) versehen ist.

17. Funkhöhenmesser (2) nach einem der Ansprüche 11 bis 16,
**dadurch gekennzeichnet, dass** die Linse (15) mit einer filternde Schicht (56) genannten speziellen Schicht versehen ist, die eine Phasenverschiebung zwischen Wellen erzeugt, die reflektierte Wellen (58) genannt werden, die zur Sendeantenne (9) zurückgeworfen werden infolge des Empfangs von einfallende Wellen (57) genannten elektromagnetischen Wellen, die aus elektrischen Funksignalen hervorgehen, die von der Sendeantenne (9) gesendet werden.

18. Funkhöhenmesser (2) nach Anspruch 17,
**dadurch gekennzeichnet, dass** die filternde Schicht (56) auf der äußeren Oberfläche der Linse (15) zumindest in ihrem Bereich, der zur Sendeantenne (9) gerichtet ist, angeordnet ist.

19. Funkhöhenmessers (2) nach einem der Ansprüche 17 und 18,
**dadurch gekennzeichnet, dass** die filternde Schicht (56) mindestens geformt ist als eine Deckbeschichtung (59) der Linse (15).

20. Funkhöhenmessers (2) nach einem der Ansprüche 17 bis 19,
**dadurch gekennzeichnet, dass** die filternde Schicht (56) zumindest als ein spezielles in die Linse (15) integriertes Relief (60) geformt ist.

21. Funkhöhenmessers (2) nach einem der Ansprüche 11 bis 20,
**dadurch gekennzeichnet, dass** der Funkhöhenmesser (2) mit einem zur Regelung der Linse (15) geeignetem Mittel (19) ausgerüstet ist, das die Wirkung der Linse (15) auf das Grundsichtfeld (C) des Funkhöhenmessers (2) verändern kann.

22. Funkhöhenmesser (2) nach Anspruch 21,
dadurch gekenntzeichnet, dass das Mittel (19) zur Regelung der Linse (15) ein Mittel zur Veränderung der optischen Anordnung (CL) der Linse (15) ist.

23. Funkhöhenmesser (2) nach Anspruch 22,
dadurch gekenntzeichnet, dass das Mittel zur Veränderung der optischen Anordnung (CL) der Linse (15) ein Mittel (55) zur Regelung eines Fluidflusses (51) im Inneren der Linse (15) ist, wodurch deren optische Eigenschaften verändert werden.

24. Funkhöhenmesser (2) nach Anspruch 23,
**dadurch gekennzeichnet, dass** die Linse (15) aus mehreren Schichten gebildet ist, die untereinander mindestens eine Fluidströmungsblase (52) bilden, wobei die Zirkulation von Fluid im Inneren der mindestens einen Blase (52) den optischen Aufbau der Linse (15) verändert.

25. Funkhöhenmesser (2) nach Anspruch 21,
**dadurch gekennzeichnet, dass** das Mittel (19) zur Regelung der Linse (15) ein Mittel zur Relativverschiebung der Antennen (9, 9') zueinander ist, und die Linse (15) beweglich auf der Funkanlage (7) montiert ist.

26. Funkhöhenmesser (2) nach einem der Ansprüche 11 bis 25,
**dadurch gekennzeichnet, dass** der Funkhöhenmesser (2) mit einem zum Einzug der Linse (15) geeigneten Mittel (21) ausgerüstet ist, das die Linse (15) relativ zu den Antennen (9, 9') verschieben kann, wobei die Linse (15) beweglich auf der Funkanlage (7) zwischen einer aktiven Stellung, in der die Linse (15) das Grundsichtfeld (C) des Funkhöhenmessers (2) verändert, und einer eingezogenen Stellung, in der die Linse (15) außerhalb des Grundsichtfelds (C) des Funkhöhenmessers (2) angeordnet ist und somit ohne Wirkung auf das Grundsichtfeld (C) des Funkhöhenmessers (2) ist, montiert ist.

27. Funkhöhenmesser (2) nach einem der Ansprüche 21 und 26,
**dadurch gekennzeichnet, dass** die Linse (15) beweglich auf einem Träger (12, 39, 41, 43) der Funkanlage (7) montiert ist und durch Manövriermittel (22, 49) verschiebbar ist, die mindestens einem beliebigen aus dem Regelungsmittel (19), der Linse (15) und dem Einzugsmittel (21) der Linse (15) zugehören.

28. Funkhöhenmesser (2) nach Anspruch 27,
**dadurch gekennzeichnet, dass** die Manövriermittel (22, 49) der Linse (15) Mittel (23) zum manuellen Manövrieren der Linse (15) durch eine Bedienungsperson (16) sind.

29. Funkhöhenmesser (2) nach einem der Ansprüche 27 und 28,
**dadurch gekennzeichnet, dass** die Manövriermittel (22, 49) der Linse (15) automatisierte Manövriermittel (24) der Linse (15) sind, mit mindestens einem Stellglied (25), dessen Betrieb von Steuermitteln (26) abhängig ist.

30. Funkhöhenmesser (2) nach Anspruch 29,
**dadurch gekennzeichnet, dass** die Steuermittel (26) manuelle Steuermittel (27), die durch eine Bedienungsperson (16) aktivierbar sind, und/oder automatisierte Steuermittel (28) umfassen, die durch den Empfang eines Signals (29), das zur Aktivierung der Steuermittel (26) geeignet ist, und das durch ein Rechenelement erzeugt wird, mit dem der Funkhöhenmesser ausgerüstet ist, und das die von der Linse (15) zu erzeugenden Effekte auf das Grundsichtfeld (C) des Funkhöhenmessers (2) bestimmt.

31. Funkhöhenmesser (2) nach einem der Ansprüche 11 bis 30,
**dadurch gekennzeichnet, dass** der Rechner (14) ein Hauptprogramm aufweist, das die Höhe über Grund (Hs) des Drehflügelflugzeugs (1) ausgehend von den besagten von der Funkanlage (7) gelieferten Daten (18) berechnet, wobei der Rechner (14) ferner ein Zusatzprogramm aufweist, das spezifische, von der Linse (15) erzeugte Wirkungen auf das Grundsichtfeld (C) des Funkhöhenmessers (2) berücksichtigt.

32. Drehflügelflugzeug (1) mit einem Funkhöhenmesser (2) nach einem der Ansprüche 11 bis 31 zur Durchführung eines Verfahrens nach einem der Ansprüche 1 bis 10, wobei das Drehflügelflugzeug (1) mit dem Funkhöhenmesser (2) ausgerüstet ist, der den Rechner (14) aufweist, der die Höhe über Grund (Hs) des Drehflügelflugzeugs (1) ausgehend von den besagten Daten (18) bestimmt, die von einer Funkanlage (7) geliefert werden, die mindestens einen besagten Satz (11, 11') von zwei Antennen (9, 9') aufweist, die durch Austausch elektromagnetischer Signale zusammenwirken, wobei die Antennen (9, 9') einen flachen Aufbau aufweisen und unter dem Drehflügelflugzeug (1), welches auf dem Boden parkend angenommen wird, eingebaut sind und mindestens durch ein besagtes Radom (10) geschützt sind, wobei die Antennen (9, 9') miteinander ein besagtes als vordefiniertes Grundsichtfeld (C) bezeichnetes Sichtfeld des Funkhöhenmessers (2) definieren, wobei das Drehflügelflugzeug (1) mit einem besagten Seilgehänge (4) für den Transport einer besagten Last unter dem Drehflügelflugzeug (1), die in dem zuvor bestimmten gegebenen Beweglichkeitsbereich (C1) baumelt, ausgerüstet ist,
**dadurch gekennzeichnet, dass** die Funkanlage (7) mindestens eine besagte Linse (15) zur Veränderung des Grundsichtfelds (C) des Funkhöhenmessers (2) mindestens entlang der Längserstreckungsachse (L) des Drehflügelflugzeugs (1) aufweist, wobei die Linse (15) das Grundsichtfeld (C) des Funkhöhenmessers (2) wie folgt verändert:
-) in dem Fall (M2a, M2b), dass kein Transport einer Last (5) mit dem Seilgehänge (4) stattfindet: Veränderung zu einer Optimierung des Sichtfelds des Funkhöhenmessers (2), wodurch diesem somit ein vordefiniertes optimales Sichtfeld (C3) genanntes Sichtfeld gegeben wird, und
-) in dem Fall (M1a, M1b) des Transports der Last (5) mit dem Seilgehänge (4): Veränderung zu einer Verkleinerung des optimalen Sichtfelds (C3), wodurch somit dem Funkhöhenmesser (2) ein begrenztes Sichtfeld (C4) genanntes Sichtfeld in Abhängigkeit von dem Beweglichkeitsbereich (C1) der Last (5), die baumelnd unter dem Drehflügelflugzeug (1) transportiert wird, gegeben wird.

33. Drehflügelflugzeug (1) nach Anspruch 32,
**dadurch gekennzeichnet, dass** die Linse (15) eine konvergente Linse (15a) zur Fokussierung des Grundsichtfelds (C) des Funkhöhenmessers (2) ist, wobei die Oberfläche (31) der Linse (15), die das Grundsichtfeld (C) des Funkhöhenmessers (2) verändert, entlang der Längsachse (L) und der Quererstreckungsachse (T) des Drehflügelflugzeug (1) konvex ist.

34. Drehflügelflugzeug (1) nach Anspruch 32,
**dadurch gekennzeichnet, dass** die Linse (15) eine konvergente Linse (15a) zur Fokussierung des Grundsichtfelds (C) des Funkhöhenmessers (2) ist, wobei die Oberfläche (31) der Linse (15), die das Grundsichtfeld (C) des Funkhöhenmessers (2) verändert, entlang der Längserstreckungsachse (L) des Drehflügelflugzeugs (1) konvex ist und entlang der Quererstreckungsachse (T) des Drehflügelflugzeugs (1) im Wesentlichen eben ist.

35. Drehflügelflugzeug (1) nach Anspruch 34,
dadurch gekenntzeichnet, dass die Linse (15) mit abgerundeten Rändern (32) versehen ist, die an den Enden der Oberfläche (31) der Linse (15) angeordnet sind, die das Grundsichtfeld (C) des Funkhöhenmessers (2) verändert, wobei die Enden als der Quererstreckungsachse des Drehflügelflugzeugs (1) folgend betrachtet werden.

36. Drehflügelflugzeug (1) nach einem der Ansprüche 32 bis 35,
**dadurch gekennzeichnet, dass** die Linse (15) abnehmbar auf der Funkanlage (7) montiert ist und zwischen einem Satz Linsen (15n) jeweiliger optischer Anordnungen austauschbar ist.

37. Drehflügelflugzeug (1) nach Anspruch 36,
**dadurch gekennzeichnet, dass** die Linse (15) abnehmbar auf der Funkanlage (7), mindestens teilweise durch Befestigungsmittel (13) der Antennen (9, 9') auf einer Außenwand des Drehflügelflugzeugs (1), montiert ist.

38. Drehflügelflugzeug (1) nach einem der Ansprüche 32 bis 37,
**dadurch gekennzeichnet, dass** der Funkhöhenmesser (2) mit den besagten automatisierten Steuermitteln (28) ausgerüstet ist, wobei das Seilgehänge (4) mit Mitteln (30) zum Erfassen einer Last (5), die von dem Seilgehänge (4) getragen wird, ausgerüstet ist, wobei die Erfassungsmittel (30) zu dem Rechenelement gehören, indem sie das Signal (29) zur Aktivierung von Steuermitteln (26) infolge eines Abwurfs der transportierten Last (5) erzeugen, was die Betätigung des Einzugsmittels (21) der Linse (15) bewirkt, das die Linse (15) zwischen der aktiven Stellung und der eingezogenen Stellung verschiebt.

39. Drehflügelflugzeug (1) nach Anspruch 38,
**dadurch gekennzeichnet, dass** der Rechner (14) zu dem Rechenelement gehört, indem er das Signal (29) zur Aktivierung von Steuermitteln (26) erzeugt, welches den Betrieb der Einzugsmittel (21) bewirkt, die die Linse (15) zwischen der eingezogenen Stellung und der aktiven Stellung infolge einer Erfassung einer Höhe über Grund (Hs) durch den Rechner (14) verschieben, die den Transport einer Last (5) mit dem Seilgehänge ausgehend von Daten (18), die von der Funkanlage (7) geliefert werden, identifiziert.

## Claims

1. Method for measuring the height above ground (Hs) of a rotorcraft (1) using a radio altimeter (2) implementing a computer (14) determining said height above ground (Hs) of the rotorcraft (1) on the basis of data (18) provided by radio equipment (7) comprising at least one set of two antennae (9, 9'), the antennae (9, 9') being installed under the rotorcraft (1) considered while it is standing on the ground, the antennae (9, 9') predefining between them what is described as a "basic" field of view (G) of the radio altimeter (2) and providing said data (14) to the computer (18) by exchanging electromagnetic signals between them,
**characterised in that**, the antennae (9, 9') being protected by at least one radome (10) and having a flat configuration, the rotorcraft (1) furthermore being provided with slinging equipment (4) for transporting a load (5), the method comprises an operation of modifying said basic field of view (C) of the radio altimeter (2) by at least one lens (15) depending on whether or not a given load (5) that has to be transported dangling under the rotorcraft (1) by said slinging equipment (4) interferes in the basic field of view (C) of the radio altimeter (2), selective use of said at least one lens (15) according to the field of mobility (C1) of the load (5) modifying the basic field of view (C) of the radio altimeter (2) according to the following modalities:
-) excluding cases (M2a, M2b) where the load (5) is transported by the slinging equipment (4), production of a field of view of the radio altimeter (2) with a predefined optimal range, known as an optimal field of view (C3),
-) in cases (M1a, M1b) where the load (5) is transported by the slinging equipment (4), production of a field of view of the radio altimeter (2), known as a limited field of view (C4) with a range less than the range of the optimal field of view (C3), the limited field of view (C4) being identified by exclusion from the optimal field of view (C3) of a previously determined field of mobility (C1) of said load (5) transported by the slinging equipment (4) viewed along at least the extended longitudinal axis (L) of the rotorcraft (1).

2. Method according to claim 1,
**characterised in that**, the lens (15) being formed of a converging lens (15a),
-) an operation in which the converging lens (15) focuses the basic field of view (C) of the radio altimeter (2) according to the previously identified field of mobility (C1) of the load (5), provides the radio altimeter (2) with the limited field of view (C4), and
-) an operation neutralising the effects produced by the converging lens (15a) on the basic field of view (C) of the radio altimeter (2), the neutralisation operation provides the radio altimeter (2) with the optimal field of view (C3).

3. Method according to claim 1,
**characterised in that**, the lens (15) being formed of a diverging lens (15b),
-) an operation in which the diverging lens (15b) widens the basic field of view (C) of the radio altimeter (2) provides the radio altimeter (2) with the optimal field of view (C3), and
-) an operation in which the diverging lens (15b) neutralises the basic field of view (C) of the radio altimeter (2) according to the previously identified field of mobility (C1) of the load (5) provides the radio altimeter (2) with the limited field of view (C4).

4. Method according to any one of claims 1 to 3,
**characterised in that** the method comprises the following operations:
-) identifying a field of mobility (C1) of at least one said given load (5), then subsequently determining a field described as an interference field (C2) and identified by intersection between the optimal field of view (C3) and the field of mobility (1) of said given load (5), then deducing the limited field of view (C4) by exclusion from the optimal field of view (C3) of the interference field (C2) viewed along at least the extended longitudinal axis (L) of the rotorcraft (1),
-) identifying an optical configuration (CL) of at least one lens (15) capable of modifying the basic field of view (C) of the radio altimeter (2):
*) either by reducing, by means of a converging lens (15a), the basic field of view (C3) of the radio altimeter (2) to said limited field of view (C4) where the basic field of view (C) of the radio altimeter (2) is equivalent to the optimal field of view (C3),
*) or by increasing, by means of a diverging lens (15b), the basic field of view (C) of the radio altimeter (2) to said predefined optimal field of view (C3) where the basic field of view (C) of the radio altimeter (2) is equivalent to the limited field of view (C4) of the radio altimeter (2), then
-) selectively using or not using at least one lens (15) whose optical configuration (CL) is previously identified, according to the field of view to be provided to the radio altimeter (2) between the optimal field of view (C3) and the limited field of view (C4), respectively in the absence and in the presence of a given load (5) being transported by the slinging equipment (4).

5. Method according to claim 4,
**characterised in that** said limited field of view (C4) is deduced by excluding from the optimal field of view (C3) said interference field (C2) viewed along both the extended longitudinal axis (L) of the rotorcraft (1) and the extended transverse axis (T) of the rotorcraft (1).

6. Method according to any one of claims 1 to 5,
**characterised:**
**in that** various fields of mobility (C1 n), for each of the various given loads (5n) respectively, are identified and subsequently various said limited fields of view (C4n) are deduced respectively for each of said various previously identified fields of mobility (C1n),
**in that** various optical configurations (CLn) of said at least one lens (15) are identified respectively according to said various limited fields of view (C4n), and
**in that** at least one lens (15) with a previously identified optical configuration (CL) for a load (5) under consideration, is used to give the radio altimeter (2) the limited field of view (C4) deduced from the field of mobility (C1) of the load (5) considered when being transported by the slinging equipment (4).

7. Method according to claim 6,
**characterised in that** said at least one lens (15) is selected from a set of interchangeable lenses (15) with respective optical configurations (CLn) previously identified according to the various given loads (5n).

8. Method according to claim 6,
**characterised in that** the optical configuration (CL) of said at least one lens (15) can be modified according to the limited field of view (C4) of the radio altimeter (2) deduced on the basis of a load (5) considered when being transported by the slinging equipment (4).

9. Method according to any one of claims 1 to 8, **characterised in that** said at least one lens (15) is selectively manoeuvrable between an active position in which the lens (15) modifies the basic field of view (C) of the radio altimeter (2) and a retracted position in which the lens (15) is disengaged from the antennae (9, 9') and consequently has no effect on the basic field of view (C) of the radio altimeter (2).

10. Method according to any one of claims 1 to 9, **characterised:**
**in that** said at least one lens (15) is selected from a set of interchangeable lenses (15) with respective optical configurations,
**in that** the optical configuration of said at least one lens (15) can be modified according to the limited field of view (C4) of the radio altimeter (2) previously deduced in accordance with the modalities applied for transport or not by slinging a said given load (5),
**in that** said at least one lens (15) is selectively manoeuvrable between an active position in which the lens (15) modifies the basic field of view (C) of the radio altimeter (2) and a retracted position in which the lens (15) is disengaged from the antennae (9, 9') and consequently has no effect on the basic field of view (C) of the radio altimeter (2).

11. Radio altimeter (2) for rotorcraft (1) configured for implementing a method according to any one of claims 1 to 10, the radio altimeter (2) comprising a computer (14) for determining the height above ground (Hs) of a rotorcraft (1) on the basis of data (18) provided by radio equipment (7) comprising at least one set of two antennae (9, 9'), the antennae (9, 9') predefining between them what is described as a basic field of view (C) of the radio altimeter (2) and providing the computer (14) with said data (18) by exchanging electromagnetic signals,
**characterised in that** the antennae (9, 9') have a flat configuration, the radio altimeter comprises a radome (10) for protecting the antennae (9, 9'), the radio equipment (7) further comprises at least one lens (15) for modifying the basic field of view (C) of the radio altimeter (2) defined by said antennae (9, 9') with a flat configuration.

12. Radio altimeter (2) according to claim 11,
**characterised in that** said lens (15) is a converging lens (15a) for focusing the basic field of view (C) of the radio altimeter (2).

13. Radio altimeter (2) according to claim 11,
**characterised in that** said lens (15) is a diverging lens (15b) for increasing the basic field of view (C) of the radio altimeter (2).

14. Radio altimeter (2) according to any one of claims 11 to 13,
**characterised in that** the lens (15) is integrated into the radome (10), then known as an optical radome (10').

15. Radio altimeter (2) according to claim 14,
**characterised in that** the optical radome (10') is formed of at least two layers comprising an outer layer (34) made of impermeable cellular material encasing an inner layer (33) forming the lens (15).

16. Radio altimeter (2) according to any one of claims 11 to 15,
**characterised in that** the antennae (9, 9'), said at least one lens (15) and the radome (10) are brought together in the same structural assembly (35) provided with reversible means for assembly on a framework (37) outside the radio altimeter (2).

17. Radio altimeter (2) according to any one of claims 11 to 16,
**characterised in that** the lens (15) is provided with a specific layer, known as a filtering layer (56), generating a phase shift between the waves, known as reflective waves (58), sent to the emitting antenna (9) after the lens (15) receives electromagnetic waves, known as incident waves (57), coming from the radio signals emitted by the emitting antenna (9).

18. Radio altimeter (2) according to claim 17,
**characterised in that** said filtering layer (56) is provided on the outer surface of the lens (15) at least on its portion oriented towards the emitting antenna (9).

19. Radio altimeter (2) according to either one of claims 17 and 18,
**characterised in that** said filtering layer (56) is formed at least of a coating (59) covering the lens (15).

20. Radio altimeter (2) according to any one of claims 17 to 19,
**characterised in that** said filtering layer (56) is formed at least of a specific relief (60) integrated into the lens (15).

21. Radio altimeter (2) according to any one of claims 11 to 20,
**characterised in that** the radio altimeter (2) is fitted with a means, described as for regulating (19) the lens (15), capable of modifying the effects of the lens (15) on the basic field of view (C) of the radio altimeter (2).

22. Radio altimeter (2) according to claim 21,
**characterised in that** the regulation means (19) for the lens (15) is a means for modifying the optical configuration (CL) of the lens (15).

23. Radio altimeter (2) according to claim 22,
**characterised in that** the means for modifying the optical configuration (CL) of the lens (15) is a means (55) for regulating circulation of fluid (51) within the lens (15) modifying its own optical characteristics.

24. Radio altimeter (2) according to claim 23,
**characterised in that** the lens (15) is formed of several strata providing between them at least one pocket (52) for circulation of fluid, circulation of fluid inside said at least one pocket (52) modifying the optical configuration of the lens (15),

25. Radio altimeter (2) according to claim 21,
**characterised in that** the regulation means (19) for the lens (15) is a means for relative displacement between the antennae (9, 9') and the lens (15) mounted so as to be moveable on the radio equipment (7).

26. Radio altimeter (2) according to any one of claims 11 to 25,
**characterised in that** the radio altimeter (2) is fitted with what is described as a retraction means (21) for the lens (15), capable of displacing the lens (15) relative to the antennae (9, 9'), the lens (15) being mounted so as to be moveable on the radio equipment (7) between an active position in which the lens (15) modifies the basic field of view (C) of the radio altimeter (2) and a retracted position in which the lens (15) is placed outside the basic field of view (C) of the radio altimeter (2) and consequently has no effect on the basic field of view (C) of the radio altimeter (2).

27. Radio altimeter (2) according to either one of claims 21 and 26,
**characterised in that** the lens (15) is mounted so as to be moveable on a support (12, 39, 41, 43) for radio equipment (7) and can be displaced by manoeuvring means (22, 49) forming part of any one of at least the regulation means (19) for the lens (15) and the retraction means (21) for the lens (15).

28. Radio altimeter (2) according to claim 27,
**characterised in that** the manoeuvring means (22, 49) for the lens (15) are manual manoeuvring means (23) for the lens (15) via an operator (16).

29. Radio altimeter (2) according to either one of claims 27 and 28,
**characterised in that** the manoeuvring means (22, 49) for the lens (15) are automated manoeuvring means (24) for the lens (15) comprising at least one actuator (25), the implementation of which is made dependent on control means (26).

30. Radio altimeter (2) according to claim 29,
**characterised in that** said control means (26) equally well comprise manual control means (27) that can be activated by an operator (16) and/or automated control means (28) that can be activated by receiving what is described as an activation instruction (29) for the control means (26), generated by a computing member fitted to the radio altimeter and identifying the effects to be produced by the lens (15) on the basic field of view (C) of the radio altimeter (2).

31. Radio altimeter (2) according to any one of claims 11 to 30,
**characterised in that**, the computer (14) comprising a main algorithm calculating the height above ground (Hs) of the rotorcraft (1) on the basis of said data (18) provided by the radio equipment (7), the computer (14) further contains an ancillary algorithm taking account of the effects produced specifically by the lens (15) on the basic field of view (C) of the radio altimeter (2).

32. Rotorcraft (1) fitted with a radio altimeter (2) according to any one of claims 11 to 31 for implementing a method according to any one of claims 1 to 10, the rotorcraft (1) being fitted with said radio altimeter (2) comprising said computer (14) identifying the height above ground (Hs) of the rotorcraft (1) on the basis of said data (18) provided by said radio equipment (7) comprising at least one said set (11, 11') of two antennae (9, 9'), cooperating by exchanging electromagnetic signals, the antennae (9, 9') having a flat configuration and being installed under the rotorcraft (1) considered while it is standing on the ground, while being protected by at least one said radome (10), the antennae (9, 9') defining between them what is described as a said predefined basic field of view (C) of the radio altimeter (2), the rotorcraft (1) being fitted with said slinging equipment (4) for transporting a said load (5) dangling under the rotorcraft (1) in a said previously identified given field of mobility (C1),
**characterised in that** the radio equipment (7) comprises at least one said lens (15) for modifying the basic field of view (C) of the radio altimeter (2) along at least the extended longitudinal axis (L) of the rotorcraft (1), the lens (15) modifying the basic field of view (C) of the radio altimeter (2) in accordance:
-) excluding cases (M2a, M2b) where said load (5) is transported by the slinging equipment (4), with optimisation of the field of view of the radio altimeter (2) then giving it a predefined field of view, known as the optimal field of view (C3), and
-) in cases (M1a, M1b) where said load (5) is transported by the slinging equipment (4), with reduction of said optimal field of view (C3) then giving the radio altimeter (2) a field of view, known as a limited field of view (C4), depending on the field of mobility (C1) of said load (5) transported dangling under the rotorcraft (1).

33. Rotorcraft (1) according to claim 32,
**characterised in that**, the lens (15) being a converging lens (15a) for focusing the basic field of view (C) of the radio altimeter (2), the surface (31) of the lens (15) modifying the basic field of view (C) of the radio altimeter (2) is convex along the longitudinal axis (L) and the extended transverse axis (T) of the rotorcraft (1).

34. Rotorcraft (1) according to claim 32,
**characterised in that**, the lens (15) being a converging lens (15a) for focusing the basic field of view (C) of the radio altimeter (2), the surface (31) of the lens (15) modifying the basic field of view (C) of the radio altimeter (2) is convex along the extended longitudinal axis (L) of the rotorcraft (1) and is essentially flat along the extended transverse axis (T) of the rotorcraft (1).

35. Rotorcraft (1) according to claim 34,
**characterised in that** the lens (15) is provided with rounded edges (32) made at the ends of the surface (31) of the lens (15) modifying the basic field of view (C) of the radio altimeter (2), said ends being viewed along the extended transverse axis (T) of the rotorcraft (1).

36. Rotorcraft (1) according to any one of claims 32 to 35,
**characterised in that** the lens (15) is mounted removably on the radio equipment (7) and is interchangeable within a set of lenses (15n) with respective optical configurations.

37. Rotorcraft (1) according to claim 36,
**characterised in that** the lens (15) is mounted removably on the radio equipment (7) at least partly by means of fixing means (13) for fixing the antennae (9, 9') to an outer wall of the rotorcraft (1).

38. Rotorcraft (1) according to any of claims 32 to 37,
**characterised in that**, the radio altimeter (2) being fitted with said automated control means (28), the slinging equipment (4) is fitted with detection means (30) for detecting a load (5) carried by the slinging equipment (4), said detection means (30) forming part of said computing member while generating said activation instruction (29) for the control means (26) following the dropping of the load (5) transported, causing the implementation of said retraction means (21) for the lens (15), moving the lens (15) between said active position and said retracted position,

39. Rotorcraft (1) according to claim 38,
**characterised in that** computer (14) forms part of said computing member while generating said activation instruction (29) for the control means (26), causing the implementation of said retraction means (21), moving the lens (15) between said retracted position and said active position, after computer (14) detects a height above ground (Hs) identifying that a load (5) is being transported by slinging on the basis of data (18) provided by the radio equipment (7).
